(19) Europäisches Patentamt
European Patent Office
Office européen des brevets

(11) **EP 4 122 720 B1**

(12) **EUROPEAN PATENT SPECIFICATION**

(45) Date of publication and mention
of the grant of the patent:
**13.03.2024 Bulletin 2024/11**

(21) Application number: **22179548.7**

(22) Date of filing: **17.06.2022**

(51) International Patent Classification (IPC):
*B60C 17/00* (2006.01)    *B60C 9/00* (2006.01)
*B60C 1/00* (2006.01)

(52) Cooperative Patent Classification (CPC):
**B60C 17/009; B60C 1/0041; B60C 9/00;**
B60C 2009/0035; B60C 2009/0071

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2021   JP 2021119018**

(43) Date of publication of application:
**25.01.2023   Bulletin 2023/04**

(73) Proprietor: **Sumitomo Rubber Industries, Ltd.
Kobe-shi, Hyogo 651-0072 (JP)**

(72) Inventors:
• **ANDO, Kanta**
  **Kobe-shi, 651-0072 (JP)**
• **MIYAZAKI, Sumiko**
  **Kobe-shi, 651-0072 (JP)**

(74) Representative: **TBK
Bavariaring 4-6
80336 München (DE)**

(56) References cited:
WO-A1-2019/140396    JP-A- 2014 189 212
RU-C1- 2 748 341

**Description**

TECHNICAL FIELD

The present invention relates to a tire.

BACKGROUND OF THE INVENTION

Conventionally, in order to increase strength of a cellulose fiber used as a carcass cord, it has been proposed to use a cellulose fiber cord reinforced with a carbon nanotube (CNT) for realizing a high durability of the carcass cord and enhance steering stability during high speed running without increasing a diameter of the carcass cord and increasing the number of cord counts (JP 2014-189212 A).
RU 2 748 341 C1 describes a cord including carbon nanotube filaments reinforced with a graphene film.
WO 2019/140396 A1 describes rubber compositions having a base masterbatch, the base masterbatch comprising a diene rubber and a solid agglomerated material comprising disaggregated carbon nanotubes consisting of a continuous network of carbon nanotubes, the continuous network comprising 1) voids and 2) aggregates of carbon nanotubes having a d50 mean size of less than 5 μm, the voids and the aggregates together being in an amount that is less than 60% of a predetermined surface area, such percentage as determined by electron microscopy image analysis, the remainder being the disaggregated carbon nanotubes in the continuous network that do not comprise a clearly defined shape and being in an amount that is at least 40% of the predetermined surface area, wherein the base masterbatch has a minimum Mooney viscosity ML(1+4)100 of at least 85 MU; and a cure system.

SUMMARY OF THE INVENTION

However, when a short fiber filler such as a cellulose fiber is used together with an organic fiber cord, a method of quantitatively evaluating orientation (degree) of the short fiber filler has not been established. Therefore, an effect of the orientation of the short fiber filler has not been fully understood.
The present invention is intended to provide a tire that achieves both ride comfort and steering stability during high speed running.
As a result of intensive studies to solve the above-described problems, the present inventors have found that both ride comfort and steering stability during high speed running can be achieved by a tire comprising a cord-rubber composite and having a weight of a predetermined value or lower, wherein the cord-rubber composite comprises an organic fiber cord, a topping rubber coating the organic fiber cord and a short fiber filler, and wherein the short fiber filler has a dispersion V of 0.6 or less defined by a predetermined equation, and conducted further studies to complete the present invention.
That is, the present invention relates to a tire as follows.
A tire comprising a cord-rubber composite,

wherein the tire has a tire weight (WT) of 20 kg or less,
wherein the cord-rubber composite comprises an organic fiber cord, a topping rubber coating the organic fiber cord, and a short fiber filler, and
wherein the short fiber filler has a dispersion V of 0.6 or less defined as follows:

$$V = 1-R$$

$$R = \left| \frac{1}{N} \sum_{j} \exp(2i\theta_j) \right|$$

$$\{\theta_j \mid j = 1,2,\cdots, N\}$$

[wherein i represents an imaginary unit, N is the number of short fiber filler masses that can be confirmed from a range of a reference area of an electron microscope image in a cross section of a topping rubber cut out in a plane parallel to both a length direction of the cord and a width direction of an arrangement of the cord with respect to the organic fiber cord, and θ represents an angle (radian) defined by an orientation direction of each short fiber filler mass with a length direction of the organic fiber cord in the cross section of the topping rubber.]

According to the present invention, a tire that achieves both ride comfort and steering stability during high speed running can be provided.

BRIEF DESCRIPTION OF THE DRAWINGS

FIG. 1 is a cross-sectional view of a tire showing one embodiment of the present invention.
FIG. 2 is a development view of a tread part showing one embodiment of the present invention.
FIG. 3 is a development view of a tread part showing one embodiment of the present invention.
FIG. 4 is a development view of a tread part showing one embodiment of the present invention.
FIG. 5 is an electron microscope image of a predetermined cross section for observation of the present invention obtained from a test tire of Example 5.
FIG. 6 is an image obtained by extracting an image portion of only a short fiber filler (CNF) mass from the electron microscope image in FIG. 5.

DETAILED DESCRIPTION

<Definition>

"Tire weight" is expressed in WT (kg). However, WT is a weight of a single tire not including a weight of a rim. On the other hand, when the lumen of the tire is provided with a member made of a sponge or sealant, a sensor member, or the like, the weight includes them.
The "standardized rim" is a rim defined for each tire, in a standard system including a standard on which the tire is based, by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tire and Rim Technical Organisation), or "Design Rim" described in "YEAR BOOK" in TRA (The Tire and Rim Association, Inc.). In addition, in the case of tires that are not defined by the standard, the "standardized rim" refers to a rim that can be rim-assembled and maintain an internal pressure, that is, one that has the smallest rim diameter and secondly has the narrowest rim width among rims that do not cause air leakage between the rim and the tire.
A "standardized internal pressure" is an air pressure defined for each tire, in a standard system including a standard on which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. In the case of the tires that are not defined by the standard, the standardized internal pressure is 250 kPa.
The "standardized state" is a state where the tire is rim-assembled on a standardized rim and a standardized internal pressure is filled, and no load is applied. In the present specification, a dimension of each part of a tire (a tire cross-sectional width W, etc.) is measured in the above-described standardized state, unless otherwise specified.
The "maximum load capacity ($W_L$) (kg)" is defined by the following equation when a tire cross-sectional width measured in the standardized state is defined as W (mm), a tire outer diameter is defined as Dt (mm), and a tire inner diameter is defined as r (mm). However, the tire cross-sectional width W is a maximum width between outer surfaces of sidewalls excluding, if any, patterns or characters on the side surface of the tire.

$$W_L = 0.000011 \times VT + 100$$

[wherein VT is a virtual volume ($mm^3$) of the tire when an internal pressure of 250 kPa is applied, and is calculated by the following equation:

$$VT = \{(Dt^2 - r^2) / 4 \times \pi\} \times W$$

Dt: Tire outer diameter (mm)
r: Tire inner diameter (mm)
$\pi$: Circular constant

W: Tire cross-sectional width (mm)]

A "tread end Ti, To" is an outermost grounding position when a standardized load is applied to a tire in a standardized state and the tire is grounded on a flat surface at a camber angle of 0 degree. The tread end Ti represents a tread end located inside a vehicle when mounted on the vehicle, and the tread end To represents a tread end located outside the vehicle.

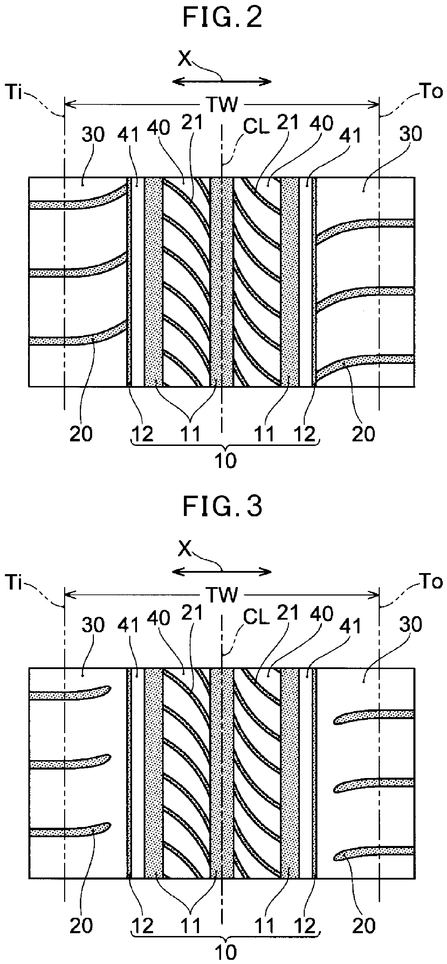

A "tread width TW" is a distance in a tire width direction X (a left-right direction in FIGS. 2 to 4) between the tread end To and the tread end Ti.

A "land part" refers to a region partitioned by a circumferential groove extending continuously in a tire circumferential direction between the tread end To and the tread end Ti in the tread part. For example, when there are two circumferential grooves, the land part is divided into a pair of shoulder land parts and a center land part sandwiched therebetween, and when there are three circumferential grooves, the center land part is further divided into a land part located inside a vehicle and a land part located outside the vehicle when the tire being mounted on the vehicle.

An "oil content" also includes an amount of oil contained in the oil-extended rubber.

Besides, in the present specification, a numerical range identified with "to" means to include the numerical values of both ends, unless otherwise specified.

<Measuring method>

A "styrene content" is calculated by $^1$H-NMR measurement. For example, it is applied for a styrene-containing rubber such as a SBR.

A "vinyl content (1 ,2-bond butadiene unit amount)" is measured by infrared absorption spectrometry. For example, it is applied for a SBR.

A "cis 1,4 bond content" is a value calculated by infrared absorption spectrometry. For example, it is applied for a BR.

A "$N_2SA$ of carbon black" is measured according to JIS K 6217-2: "Carbon black for rubber industry-Fundamental characteristics-Part 2: Determination of specific surface area-Nitrogen adsorption methods-Single-point procedures".

A "$N_2SA$ of silica" is measured by the BET method according to ASTM D3037-93.

<Tire>

The tire of the present invention will be described as follows.

The tire of the present invention is a tire comprising a cord-rubber composite, wherein the tire has a tire weight (WT) of 20 kg or less, wherein the cord-rubber composite comprises an organic fiber cord, a topping rubber coating the organic fiber cord, and a short fiber filler, and wherein the short fiber filler has a dispersion V of 0.6 or less defined by the above-described equation.

Although it is not intended to be bound by theory, the following can be considered as a mechanism by which the tire of the present invention can achieve both ride comfort and steering stability during high speed running.

That is, the tire according to the present invention comprises a cord-rubber composite, the cord-rubber composite having a short fiber filler being oriented, and therefore anisotropy of stress distribution appears in the material at the time of deformation, and anisotropy further appears in an elastic modulus. Therefore, such cord-rubber composite can exert a stronger hoop effect on the tire than before, and it is considered, as a result, the tire can exhibit an excellent steering stability even during high speed running with a large input. On the other hand, the cord-rubber composite becomes able to flexibly move in a direction perpendicular to an orientation direction of a short fiber filler (a tire diameter direction), and therefore it becomes easy to obtain followability to a road surface. Therefore, it is considered that an excellent ride comfort can also be exhibited.

However, if compression of the tire on a grounding surface becomes too large, the short fiber filler becomes partially subjected to a strong tensile deformation, and good ride comfort and steering stability during high speed running cannot be obtained. Therefore, the tire weight is suppressed to 20 kg or less to reduce influence of the weight of the tire itself. It is considered that, as a result, the anisotropy of the stress distribution of the short fiber filler in the grounding surface does not become excessive, and the good ride comfort and steering stability during high speed running are not impaired.

As described above, the effect of the orientation of the short fiber filler in the cord-rubber composite and the effect of suppressing the tire weight are combined, and as a result, both steering stability during high speed running and ride comfort can be achieved.

Besides, conventionally, for a cord-rubber composite compounded with a short fiber filler, it has been considered that anisotropy of an elastic modulus and strength of the cord-rubber composite are associated with various factors such as a fiber diameter and a fiber length of the short fiber filler, a length and a size of a short fiber filler mass, a compounding amount of the short fiber filler, and a degree of orientation of the short fiber filler, and a quantitative evaluation method has not been established. The present invention is characterized by finding that, focusing on a short fiber filler mass in which a plurality of short fiber fillers are aggregated, ride comfort and steering stability during high speed running can be improved through evaluation and control, by a dispersion V obtained from a predetermined equation, of a degree of orientation of the short fiber filler mass at a cross section of a cord-rubber composite cut in a predetermined plane.

A ratio $(WT/W_L)$ of a tire weight (WT) to a maximum load capacity $(W_L)$ of the tire as defined below is preferably 0.027 or less.

$$W_L = 0.000011 \times VT + 100$$

[wherein VT is a virtual volume $(mm^3)$ of the tire when an internal pressure of 250 kPa is applied, and is calculated by the following equation:

$$VT = \{(Dt^2 - r^2) / 4 \times \pi\} \times W$$

Dt: Tire outer diameter (mm)
r: Tire inner diameter (mm)
$\pi$: Circular constant
W: Tire cross-sectional width (mm)]

Generally, it is considered that the higher the maximum load capacity becomes, the heavier the tire weight becomes, which makes it easier for impact to be transmitted. However, by satisfying the above-described relationship for the tire weight to the maximum load capacity, the transmission of the impact can be suppressed, and a good ride comfort becomes easy to be obtained. Moreover, by reducing the tire weight, contribution of a short fiber-containing rubber-cord composite in the tire is increased, so that it is considered that a good steering stability during high speed running also becomes easy to be obtained.

In the tire, an average aspect ratio as defined below for the short fiber filler mass is preferably 3.0 or more.

$$\text{Average aspect ratio} = (\text{mean value of major axis of short fiber filler mass}) / (\text{mean value of minor axis of short fiber filler mass})$$

It is considered that anisotropy of an elastic modulus in a cord-rubber composite becomes easy to be generated by adopting such configuration and orientation.

An average of the angle (radian) defined by the length direction of the organic fiber cord with the orientation direction of each short fiber filler mass of the tire is preferably $\pi/4$ or less.

With such configuration, it is considered that, as a result of suppressing deviation of the angle of the orientation direction of the short fiber filler mass with the length direction of the organic fiber cord, effects of the present invention become easy to be exhibited.

In the tire, the short fiber filler is preferably at least one selected from a group consisting of a cellulose nanofiber (CNF) and a carbon nanotube (CNT).

It is considered that the CNF and the CNT easily exhibit the effects of the present invention as short fiber fillers.

The cross-sectional width W of the tire is preferably 150 mm to 290 mm.

With such configuration, it is considered that the effects of the present invention are easily exhibited.

In the tire, it is preferable that a carcass comprises the cord-rubber composite.

With such configuration, it is considered that the effects of the present invention are easily exhibited.

In the tire, it is preferable that the tire outer diameter Dt and the tire cross-sectional width W satisfy the following inequality (1):

$$1963.4 \leqq (Dt^2 \times \pi/4) / Wt \leqq 2827.4 \quad (1)$$

It is considered that, by increasing a contour with respect to a cross-sectional width of the tire, inertia at the time of rolling can be increased and the steering stability can be improved. At the same time, it is considered that transmission of impact from the tread part can be reduced. In addition, it is considered that, when these effects are combined with a reaction force in an orientation direction and flexibility in an opposite orientation direction of a cord-rubber composite comprising a short fiber filler, a good steering stability during high speed running and a good ride comfort become easy to be obtained.

It is preferable that the tire comprises a tread part, the tread part having a tread end To that is outside a vehicle and a tread end Ti that is inside the vehicle when mounted on the vehicle, and having, between the tread end To and the tread end Ti, two or more circumferential grooves extending continuously in a tire circumferential direction, and a pair of shoulder land parts partitioned by a pair of outermost circumferential grooves located placed outermost in a tire width direction among the circumferential grooves and one or more center land parts located between the pair of shoulder land parts, the pair of shoulder land parts and the one or more center land parts having a plurality of lateral grooves extending in the tire width direction, respectively, wherein, with respect to a lateral groove of at least one shoulder land part among the pair of shoulder land parts, one end of the lateral groove reaches a tread grounding end and the other end stays in the land part without reaching the outermost circumferential groove.

When one end of the lateral groove reaches the tread grounding end, a shear deformation at the grounding end becomes easy to be obtained, and when the other end of the lateral groove stays in the land part, a reaction force also becomes easy to be obtained, so that it is considered that steering stability becomes easy to be obtained. In addition, it is considered that, when these effects are combined with a reaction force in an orientation direction and flexibility in an opposite orientation direction of a cord-rubber composite comprising a short fiber filler, a good steering stability during high speed running and a good ride comfort become easy to be obtained.

In the above-described tire, it is preferable that, with respect to a lateral groove of at least one center land part among the one or more center land parts, one end of the lateral groove of at least one the center land part connects with one of the two circumferential grooves partitioning the center land part and the other end stays in the land part without reaching the other circumferential groove.

This is because that, with such configuration, a pattern rigidity of the center land part can be increased.

In the above-described tire, it is preferable that the two circumferential grooves partitioning the center land part consist of a circumferential groove having a large distance from a tire center line and a circumferential groove having a small distance from the tire center line, and that the circumferential groove having a large distance from the tire center line is the circumferential groove with which the lateral groove connects.

It is considered that a reaction force from a grounding center of the tire becomes easy to be generated when the above-described lateral groove connects with the circumferential groove having a large distance from the tire center line.

The tire is preferably a run flat tire.

With such configuration, it is considered that the effects of the present invention are easily exhibited.

(Tire comprising cord-rubber composite)

The tire of the present invention is a tire comprising a cord-rubber composite. The cord-rubber composite comprises an organic fiber cord, a topping rubber coating the organic fiber cord, and a short fiber filler. Here, in the cord-rubber composite, the organic fiber cord is arranged in a certain direction. Moreover, a plurality of short fiber fillers aggregate with each other to form a short fiber filler mass.

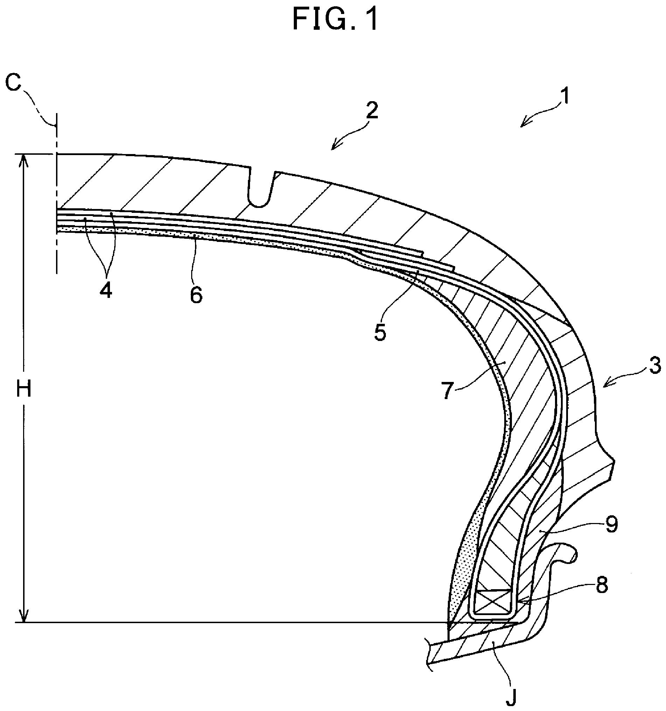

FIG. 1 is a cross-sectional view showing one embodiment of the tire of the present invention. In FIG. 1, the tire 1 of the present invention is a run flat tire, which comprises a tread part 2, a sidewall part 3, a breaker 4, a carcass 5, an inner liner 6, a side reinforcing rubber 7, a bead part 8, and a clinch 9.

In the tire of the present invention, application of the cord-rubber composite is not particularly limited, and it can be used as a member comprising an organic fiber cord and a topping rubber coating the cord. More specifically, it can be used for, for example, a breaker or a carcass, and among them, it is preferably used for a carcass.

(Tire weight)

The tire weight WT (kg) of the present invention is 20 kg or less. When the tire weight exceeds 20 kg, the volume of the tire increases, so that compression of the tire on the grounding surface tends to be too large, and the short fiber filler becomes partially subjected to a strong tensile deformation. Therefore, good ride comfort and steering stability during high speed running cannot be obtained. The tire weight is preferably 19 kg or less, more preferably 18 kg or less, further preferably 17 kg or less, further preferably 16 kg or less. A lower limit of the tire weight WT is not particularly limited, but, for example, it may be about 8 kg.

(Organic fiber cord)

The organic fiber cord used in the cord-rubber composite of the present invention refers to one obtained by twisting one or more filament yarns, and for example, a cord usually used as a reinforcing material in the tire industry can be used.

Examples of types of the organic fiber used for the organic fiber cord include, for example, polyester fibers such as polyethylene terephthalate (PET) and polyethylene naphthalate (PEN); nylon fibers; rayon fibers; vinylon fibers; aramid fibers; and polyurethane fibers, and the like. The organic fiber can be used alone, or two or more thereof can be used in combination.

Among these organic fibers, from the viewpoint of the effects of the present invention, it is preferable to use polyester fibers such as polyethylene terephthalate (PET) and polyethylene naphthalate (PEN) and rayon fibers, and among them, it is preferable to use rayon fibers.

As the cord consisting of polyester fibers (polyester cord), for example, i) one obtained by gathering respective two or three multifilaments of 1100 decitex (dtex) (in other words, 1100/2 decitex or 1100/3 decitex), primarily twisting them 10 to 60 times/10 cm, and then finally twisting two of the primarily twisted cords in the same number of and in the opposite direction to the primary twist, and ii) one obtained by gathering respective two multifilaments of 1670 decitex (in other words, 1670/2 decitex), primarily twisting them 20 to 50 times/10 cm, and then finally twisting two of the primarily twisted cords in the same number of and in the opposite direction to the primary twist, may be used.

As the cord consisting of nylon fibers (nylon cord), for example, i) one obtained by gathering respective two multifilaments of 940 decitex (in other words, 940/2 decitex), primarily twisting them 31 to 48 times/10 cm, and then finally twisting two of the primarily twisted cords in the same number of and in the opposite direction to the primary twist (intermediate elongation of 8.80% when a constant load of 44N is applied), and ii) one obtained by gathering respective two multifilaments of 1400 decitex (in other words, 1400/2 decitex), primarily twisting them 30 to 51 times/10 cm, and then finally twisting two of the primarily twisted cords in the same number of and in the opposite direction to the primary twist (intermediate elongation of 8.80% when a constant load of 66N is applied), may be used.

As the cord consisting of rayon fibers (rayon cord), for example, one obtained by gathering respective two multifilaments of 1840 decitex (in other words, 1840/2 decitex), primarily twisting them 20 to 50 times/10 cm, and then finally twisting two of the primarily twisted cords in the same number of and in the opposite direction to the primary twist (intermediate elongation of 4.80% when a constant load of 44N is applied) may be used.

As the cord consisting of aramid fibers (aramid cord), for example, one obtained by gathering respective two or three aromatic polyamide multifilaments of 1670 decitex (in other words, 1670/2 decitex or 1670/3 decitex) (Kevlar manufactured by DuPont), primarily twisting them 30 to 78 times/10 cm, and then finally twisting two of the primarily twisted cords in the same number of and in the opposite direction to the primary twist (intermediate elongation of 0.7% to 1.5% when a constant load of 44N is applied) may be used.

As the cord consisting of polyester fibers and nylon fibers (polyester-nylon hybrid cord), for example, one obtained by gathering two of a polyester multifilament of 1440 decitex and a nylon multifilament of 1440 decitex (in other words, 1440-P/1440-N decitex), primarily twisting them 30 to 38 times/10 cm, and then finally twisting two of the primarily twisted cords in the same number of and in the opposite direction to the primary twist (intermediate elongation of 4.40% when a constant load of 44N is applied; intermediate elongation of 6.30% when a constant load of 66N is applied) may be used.

As the cord consisting of aramid fibers and nylon fibers (aramid-nylon hybrid cord), for example, one obtained by gathering two of an aramid multifilament of 1100 decitex and a nylon multifilament of 940 decitex (in other words, 1100-P/940-N decitex), primarily twisting them 42 times/10 cm, and then finally twisting two of the primarily twisted cords in the same number of and in the opposite direction to the primary twist (intermediate elongation of 3.60% when a constant load of 44N is applied) may be used.

(Topping rubber)

In the cord-rubber composite of the present invention, a rubber composition used for the topping rubber coating the organic fiber cord (a rubber composition for topping rubber) is not particularly limited as long as it is usually used in the rubber industry.

<<Rubber component>>

As rubber components, an isoprene-based rubber, a styrene-butadiene rubber (SBR), a butadiene rubber (BR), and the like can be used, and among them, a SBR and an isoprene-based rubber are preferable because they are excellent in mechanical strength, reversion resistance, heat resistance, and crack growth resistance. The rubber component can be used alone, or two or more thereof can be used in combination.

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination. The NR is not particularly limited, and those common in the tire industry can be used, examples of which include, for example, SIR20, RSS#3, TSR20, and the like.

A content of the isoprene-based rubber when compounded in 100% by mass of the rubber component is preferably 50% by mass or more, more preferably 60% by mass or more, further preferably 70% by mass or more, and it may be 100% by mass, from the viewpoint of the effects of the present invention.

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination. Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less from the viewpoints of temperature dependence of grip performance and blow resistance, and it is preferably 35% by mass or less, more preferably 30% by mass or less, from the viewpoint of the effects of the present invention. The styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. The vinyl content of the SBR is measured by the above-described measuring method.

A content of the SBR when compounded in 100% by mass of the rubber component is preferably 10% by mass or more, more preferably 20% by mass or more, further preferably 50% by mass or more, from the viewpoint of the effects of the present invention. Moreover, the content of the SBR is preferably 50% by mass or less, more preferably 40% by mass or less, further preferably 30% by mass or less.

A BR is not particularly limited, and those common in the tire industry can be used such as, for example, a BR having a cis 1,4 bond content (cis content) of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination. The cis 1,4 bond content of the BR is measured by the above-described measuring method. Examples of modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like. Examples of such modified BRs include, for example, a tin-modified BR and a modified BR for silica manufactured and sold by ZS Elastomer Co., Ltd., etc.

A content of the BR when compounded in 100% by mass of the rubber component is preferably 3% by mass or more, more preferably 5% by mass or more, further preferably 10% by mass or more, from the viewpoint of the effects of the present invention. Moreover, the content of the BR is preferably 40% by mass or less, more preferably 20% by mass or less, further preferably 15% by mass or less.

As the rubber components according to the present invention, rubber components other than the above-described isoprene-based rubbers, SBRs, and BRs may be compounded. As other rubber components, crosslinkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Contents of other rubbers in the rubber component may be 0% by mass.

<<Filler>>

The rubber composition according to the present invention can comprise a filler, and examples of the filler include carbon black, silica, and the like. The filler can be used alone, or two or more thereof can be used in combination.

As carbon black, those commonly used in the tire industry can be appropriately utilized, examples of which include N134, N110, N220, N234, N219, N339, N330, N326, N351, N550, N762, and the like. These carbon black may be used alone, or two or more thereof may be used in combination.

A nitrogen adsorption specific surface area ($N_2SA$) of carbon black is preferably 80 m$^2$/g or more, more preferably 90 m$^2$/g or more, further preferably 100 m$^2$/g or more, from the viewpoint of reinforcing property. Moreover, the $N_2SA$ is preferably 200 m$^2$/g or less, more preferably 170 m$^2$/g or less, further preferably 155 m$^2$/g or less, from the viewpoints of fuel efficiency and processability. The $N_2SA$ of carbon black is measured by the above-described measuring method.

A content of carbon black when compounded based on 100 parts by mass of the rubber component is preferably 5 parts by mass or more, more preferably 10 parts by mass or more, further preferably 20 parts by mass or more, from the viewpoints of abrasion resistance and wet grip performance. Moreover, it is preferably 60 parts by mass or less, more preferably 55 parts by mass or less, further preferably 50 parts by mass or less, particularly preferably 10 parts by mass or less, from the viewpoint of fuel efficiency.

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is preferably 140 m$^2$/g or more, further preferably 170 m$^2$/g or more, from the viewpoints of fuel efficiency and abrasion resistance. Moreover, it is preferably 350 m$^2$/g or less, more preferably 300 m$^2$/g or less, further preferably 250 m$^2$/g or less, from the viewpoints of fuel efficiency and processability. The $N_2SA$ of silica is measured by the above-described measuring method.

A content of silica when compounded based on 100 parts by mass of the rubber component is preferably 5 parts by mass or more, more preferably 10 parts by mass or more, further preferably 20 parts by mass or more, from the viewpoint of wet grip performance. Moreover, it is preferably 60 parts by mass or less, more preferably 50 parts by mass or less, further preferably 40 parts by mass or less, from the viewpoint of abrasion resistance.

As fillers, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone, or two or more thereof may be used in combination.

<<Silane coupling agent>>

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and mercapto-based silane coupling agents are preferable. These silane coupling agents may be used alone, or two or more thereof may be used in combination.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<<Other compounding agents>>

The rubber composition according to the present invention can appropriately comprise compounding agents conventionally and generally used in the tire industry, for example, a softening agent, wax, processing aid, stearic acid, zinc oxide, an antioxidant, a vulcanizing agent, a vulcanization accelerator, and the like, in addition to the above-described components.

Examples of the softening agent include, for example, oil, a liquid rubber, an ester-based plasticizing agent, resin, and the like. The softening agent may be used alone, or two or more thereof may be used in combination.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like. Oil may be used alone, or two or more thereof may be used in combination.

A content of oil when compounded based on 100 parts by mass of the rubber component is preferably 1 part by mass or more, more preferably 3 parts by mass or more, further preferably 5 parts by mass or more, from the viewpoint of processability. Moreover, it is preferably 40 parts by mass or less, more preferably 20 parts by mass or less, further preferably 10 parts by mass or less, from the viewpoint of abrasion resistance.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. The liquid rubber may be used alone, or two or more thereof may be used in combination.

A content of the liquid rubber when compounded based on 100 parts by mass of the rubber component is preferably 1 part by mass or more, more preferably 3 parts by mass or more, further preferably 5 parts by mass or more. Moreover, the content of the liquid rubber is preferably 30 parts by mass or less, more preferably 20 parts by mass or less, further preferably 10 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A content of the ester-based plasticizing agent when compounded based on 100 parts by mass of the rubber component is preferably 1 part by mass or more, more preferably 3 parts by mass or more, further preferably 5 parts by mass or more. Moreover, the content of the ester-based plasticizing agent is preferably 30 parts by mass or less, more preferably 20 parts by mass or less, further preferably 10 parts by mass or less.

Resin is not particularly limited, examples of which include a C9-based petroleum resin, a C5-C9-based petroleum resin, an alkylphenol resin, a coumarone-based resin, a terpene-based resin, and a rosin-based resin, and the like, which are commonly used in the tire industry. Resin may be used alone, or two or more thereof may be used in combination.

A content of the softening agent when compounded based on 100 parts by mass of the rubber component (a total amount of a plurality of softening agents when used in combination) is preferably 5 parts by mass or more, more preferably 10 parts by mass or more, further preferably 15 parts by mass or more, from the viewpoint of wet grip performance. Moreover, it is preferably 100 parts by mass or less, more preferably 50 parts by mass or less, further preferably 25 parts by mass or less, from the viewpoint of processability.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

(Short fiber filler)

The cord-rubber composite of the present invention comprises a short fiber filler. The short fiber filler may be compounded in a form that can contribute to anisotropy and strength of the cord-rubber composite. For example, the short fiber filler may be compounded in a rubber composition forming a topping rubber or may be compounded in a form of being sprinkled on an organic fiber cord.

As the short fiber filler, any of those commonly used in the tire industry can be used, and examples of such short fiber filler include a nylon fiber, a rayon fiber, an aramid fiber, a polyethylene naphthalate fiber, a polyester fiber, a cellulose fiber such as a cellulose nano fiber, and a nanocarbon material such as a carbon nanotube. The short fiber filler can be used alone, or two or more thereof can be used in combination. Among them, a cellulose fiber and a nanocarbon material are preferable, and a cellulose nanofiber (CNF) and a carbon nanotube (CNT) are particularly preferable.

An average length of the short fiber filler is preferably 0.2 μm or more, more preferably 0.5 μm or more, further preferably 1.0 μm or more, further preferably 2.0 μm or more, from the viewpoint of strength of the cord-rubber composite. On the other hand, the average length of the short fiber filler is preferably 20.0 μm or less, more preferably 15.0 μm or less, further preferably 10.0 μm or less, from the viewpoint of dispersibility to a matrix. An average diameter (width) of the short fiber filler is preferably 1 nm or more, more preferably 2 nm or more, further preferably 3 nm or more, further preferably 5 nm or more, from the viewpoint of strength of the cord-rubber composite. On the other hand, the average diameter (width) of the short fiber filler is preferably 300 nm or less, more preferably 270 nm or less, further preferably 240 nm or less, further preferably 210 nm or less, from the viewpoint of dispersibility to the matrix. The average length and the average diameter of the short fiber filler can be calculated as average values of any 100 pieces.

An aspect ratio of the short fiber filler is preferably 3 or more, more preferably 5 or more, further preferably 10 or more, from the viewpoint of strength of the cord-rubber composite. On the other hand, the aspect ratio of the short fiber filler is preferably 2000 or less, more preferably 1700 or less, further preferably 1500 or less, further preferably 1300 or less, from the viewpoint of dispersibility to the matrix. The aspect ratio of the short fiber filler is a value calculated as a ratio of an average length to an average diameter.

A content of the short fiber filler is preferably 5 parts by mass or more, more preferably 10 parts by mass or more, further preferably 15 parts by mass or more, based on 100 parts by mass of the topping rubber, from the viewpoint of strength of the cord-rubber composite. On the other hand, the content of the short fiber filler is preferably 60 parts by mass or less, more preferably 50 parts by mass or less, further preferably 40 parts by mass or less, from the viewpoint of adhesiveness between the organic fiber cord and the topping rubber.

(Short fiber filler mass)

In the cord-rubber composite, a plurality of short fiber fillers aggregate with each other to form a short fiber filler mass. An mean value of major axis lengths of the short fiber filler mass is preferably 1.0 $\mu$m or more, more preferably 3.0 $\mu$m or more, further preferably 5.0 $\mu$m or more, from the viewpoint of the effects of the present invention. On the other hand, the mean value of the major axis lengths of the short fiber filler mass is preferably 100.0 $\mu$m or less, more preferably 50.0 $\mu$m or less, further preferably 20.0 $\mu$m or less, from the viewpoint of the effects of the present invention. Moreover, an mean value of minor axis lengths of the short fiber filler mass is preferably 0.1 $\mu$m or more, more preferably 1.0 $\mu$m or more, further preferably 2.0 $\mu$m or more, from the viewpoint of the effects of the present invention. On the other hand, the mean value of minor axis lengths of the short fiber filler mass is preferably 50.0 $\mu$m or less, more preferably 30.0 $\mu$m or less, further preferably 10.0 $\mu$m or less, from the viewpoint of the effects of the present invention. Here, for each short fiber filler mass, the "major axis" refers to a diameter at which the diameter of the short fiber filler mass becomes maximum in an electron microscope image of an observation surface cut out from the cord-rubber composite, and the mean value is an arithmetic mean of these diameters. On the other hand, the "minor axis" refers to a maximum diameter in a direction perpendicular to the major axis, and the mean value is an arithmetic mean value of these diameters. Besides, the cutout of the observation surface is performed in a plane parallel to both a length direction of a cord and a width direction of an arrangement of the cord for with respect to the organic fiber cord. The mean value of the major axis and the mean value of the minor axis of the short fiber filler mass can be calculated as mean values of n pieces of short fiber filler masses included in a range of a "reference area" which will be described below.

An average aspect ratio of the short fiber filler mass as defined below is preferably 1.5 or more, more preferably 1.8 or more, further preferably 2.0 or more, from the viewpoint of the effects of the present invention. The average aspect ratio is preferably 20.0 or less, more preferably 10.0 or less, further preferably 5.0 or less, from the viewpoint of the effects of the present invention.

$$\text{Average aspect ratio} = \text{(mean value of major axis of short fiber filler mass)} / \text{(mean value of minor axis of short fiber filler mass)}$$

A direction of the major axis of the short fiber filler mass refers to an "orientation direction" of the short fiber filler mass. An angle ($\theta$, a value in a range of 0 to $\pi$ (radian)) defined by an orientation direction of each short fiber filler mass with a length direction of the organic fiber cord has an average of preferably $\pi/4$ or less, more preferably $\pi/5$ or less, further preferably $\pi/6$ or less, from the viewpoint of the effects of the present invention. The smaller the $\theta$ is, the more preferable it is, and it is more preferable that each short fiber filler mass is oriented in the length direction of the organic fiber cord ($\theta = 0$).

(Dispersion V of short fiber filler mass)

A dispersion V of the short fiber filler mass is a value defined by the following equation based on the above-described $\theta$. In the present invention, the dispersion V is 0.6 or less from the viewpoint of its effect. The dispersion V is preferably 0.5 or less, more preferably 0.4 or less, further preferably 0.3 or less, further preferably 0.25 or less.

$$V = 1-R$$

$$R = \left| \frac{1}{N} \sum_j \exp\left(2i\theta_j\right) \right|$$

$$\{\theta_j \mid j = 1,2,\cdots, N\}$$

[wherein i represents an imaginary unit, N is the number of short fiber filler masses that can be confirmed from a range of a reference area of an electron microscope image in a cross section of a topping rubber cut out in a plane parallel to both a length direction of the cord and a width direction of an arrangement of the cord with respect to organic fiber cord, and θ represents an angle (radian) defined by an orientation direction of each short fiber filler mass with a length direction of the organic fiber cord in the cross section of the topping rubber.]

The above-described "range of the reference area" is not particularly limited as long as a value of N is in a range sufficient for calculating a dispersion V of the short fiber filler mass. Such range may vary depending on compounding of a rubber composition for topping, a type of a short fiber filler used, and the like, and for example, a rectangular or square range with a side having a length in a range of 200 $\mu$m to 400 $\mu$m is exemplified.

Useful indexes for evaluating the effects of the present invention can be obtained by calculating a dispersion V obtained by the above-described predetermined equation focusing on an angle (θ) defined by the orientation direction of the short fiber filler mass with the length direction of the organic fiber cord at a cross section obtained by cutting out, in a plane parallel to both the length direction of the cord and the width direction of the arrangement of the cord with respect to the organic fiber cord, a cord-rubber composite comprising a short fiber filler.

(WT/$W_L$)

In the tire of the present invention, a ratio (WT/$W_L$) of a tire weight (WT) to a maximum load capacity ($W_L$) as defined below is preferably 0.027 or less, more preferably 0.025 or less, further preferably 0.024 or less, further preferably 0.020 or less, further preferably 0.019 or less, from the viewpoint of suppressing the tire weight to facilitate the effects of the present invention.

$$W_L = 0.000011 \times VT + 100$$

[wherein VT is a virtual volume (mm$^3$) of the tire when an internal pressure of 250 kPa is applied, and is calculated by the following equation:

$$VT = \{(Dt^2-r^2) / 4 \times \pi\} \times W$$

Dt: Tire outer diameter (mm)
r: Tire inner diameter (mm)
$\pi$: Circular constant
W: Tire cross-sectional width (mm)]

Generally, as the maximum load capacity increases, the tire weight also increases, but it is considered that, by suppressing the tire weight so that it has a constant ratio with respect to the maximum load capacity as described above, good ride comfort and steering stability during high speed running can be obtained.

(Tire cross-sectional width)

The tire cross-sectional width W (mm) of the present invention is preferably 150 to 290 mm from the viewpoint of the effects of the present invention. The tire cross-sectional width is preferably 160 mm or more, more preferably 170 mm or more. On the other hand, the tire cross-sectional width is preferably 280 mm or less, more preferably 270 mm or less.

(Relational expression between Dt and W (1))

It is preferable that the tire outer diameter Dt and the tire cross-sectional width W satisfy the following inequality (1):

$$1963.4 \leqq (Dt^2 \times \pi/4) / W \leqq 2827.4 \ (1)$$

It is considered that, by increasing a contour with respect to the cross-sectional width so as to satisfy the inequality (1), deformation transmitted from the tread part at the time of rolling is minimized, and a reinforcing effect by a short fiber is exhibited, so that good ride comfort and steering stability during high speed running can be improved.
The tire that satisfies the inequality (1) can be classified as so-called a tire having a narrow width and a large diameter, and can be expected to be excellent in noise performance during high speed running. The left side of the above-described inequality (1) is preferably 1970, more preferably 2070. On the other hand, the right side of the above-described inequality (1) is preferably 2800, more preferably 2700.

(Tread part)

In the tire of the present invention, the tread part has a tread end To that is outside a vehicle and a tread end Ti that is inside the vehicle when mounted on the vehicle, and has, between the tread end To and the tread end Ti, two or more circumferential grooves extending continuously in a tire circumferential direction, and a pair of shoulder land parts partitioned by a pair of outermost circumferential grooves placed outermost in a tire width direction among the circumferential grooves and one or more center land parts located between the pair of shoulder land parts, the pair of shoulder land parts and the one or more center land parts preferably having a plurality of lateral grooves extending in the tire width direction, respectively.

<<Circumferential groove, land part>>

The circumferential groove may extend linearly or may extend in a zigzag shape. Moreover, the number of circumferential grooves may be two or more. When there are three or more circumferential grooves, the center land part is further divided into a land part located inside a vehicle and a land part located outside the vehicle when mounted on the vehicle. Accordingly, a tread pattern of each land part can be made different, which is preferable because a degree of freedom in designing the tread pattern is improved. The number of circumferential grooves may be four or more, or five or more.
When the number of circumferential grooves is three or more, a pair of circumferential grooves placed outermost in the tire width direction are referred to as outermost circumferential grooves, and circumferential grooves other than the above-described outermost circumferential grooves are referred to as center circumferential grooves. Among the pair of outermost circumferential grooves, at least one outermost circumferential groove preferably has a groove width narrower than that of at least one of the center circumferential grooves. Moreover, it is more preferable that both groove widths of the pair of outermost circumferential grooves are narrower than the groove widths of the center circumferential grooves.
When the number of circumferential grooves is five or more, it is preferable that, among the three or more center circumferential grooves, the center circumferential groove in the middle has a groove width wider than those of the other center circumferential grooves on the both sides. With such configuration, i.e., adjusting a groove width as described above, a reaction force on a shoulder land part can be increased, and steering stability on a snowy road surface tends to be easily improved because a pressure at outer side of tread part in a tire width direction tends to inevitably increase when turning.

<<Lateral groove of land part>>

The land part has a plurality of lateral grooves extending in a tire width direction. A width of the lateral groove is, but not particularly limited to, usually 8 mm or less. Among the lateral grooves, those having a width of 2 mm or less are particularly referred to as sipes. A direction of the lateral groove may have a predetermined angle with respect to a tire width direction W. A range of the angle is, for example, 0° to ± 80°. In one lateral groove, the angle may be constant at an arbitrary position in the tire width direction, or the angle may change according to displacement of a position in the tire width direction.
The lateral groove preferably has one end that does not connect with a circumferential groove from the viewpoint of increasing a pattern rigidity. For example, it is preferable that the lateral groove reaches the tread grounding end at one end thereof, and stays in the land part without reaching the outermost circumferential groove at the other end thereof, in at least one shoulder land part of the pair of shoulder land parts, preferably in both shoulder land parts. Moreover, it is preferable that the lateral groove connects with one of the two circumferential grooves partitioning the center land part at one end thereof, and stays in the land part without reaching the other circumferential groove at the other end thereof, in at least one center land part. Moreover, when the two circumferential grooves partitioning the center land part consist of a circumferential groove having a large distance from a tire center line and a circumferential groove having a small distance from the tire center line, the circumferential groove with which the lateral groove connects is preferably the circumferential groove having the large distance from the tire center line.

All lateral grooves may connect with all adjacent circumferential grooves, but it is preferable that some of the lateral grooves are the above-described lateral grooves having one end that does not connect with adjacent circumferential grooves, and it is more preferable that all lateral grooves are the above-described lateral grooves having one end that does not connect with adjacent circumferential grooves.

<<Tread pattern>>

The tread pattern of the tire of the present invention is not particularly limited as long as it follows the description above. The tread pattern of the tire of the present invention will be described with reference to the drawings as follows, but the drawings are merely for explaining the embodiments, and the contents of the present invention are not limited by these drawings.

FIG. 2 is a development view of a tread part showing one embodiment of the present invention. X represents a tire width direction. TW represents a distance in the tire width direction X between an inner tread end Ti and an outer tread end To. The tread part has five circumferential grooves 10 in linear shapes (three center circumferential grooves 11 and two outermost circumferential grooves 12). The widest center circumferential groove 11 passes over the tire center line C, a pair of center circumferential grooves 11 whose width is slightly narrow pass outside the widest center circumferential groove 11, and a pair of outermost circumferential grooves 12 whose width is narrow pass further outside the pair of center circumferential grooves 11. In a shoulder land part 30, lateral grooves 20 of the shoulder land part 30 reach the tread grounding end Ti or To at one end thereof and reach the outermost circumferential groove at the other end thereof. In a pair of center land parts 40 which contact with the center circumferential groove 11 passing through the tire center line C, lateral grooves (sipe) 21 of the pair of center land parts 40 connect with two center circumferential grooves 11 partitioning the each center land part at both ends, respectively. No lateral groove is formed on a pair of center land parts 41 located further outside the center land part.

FIG. 3 is a development view of a tread part showing one embodiment of the present invention. FIG. 3 differs from FIG. 2 in that, in the pair of shoulder land parts 30, the lateral grooves 20 reach the tread grounding end at one end thereof, but do not reach the outermost circumferential groove at the other end thereof.

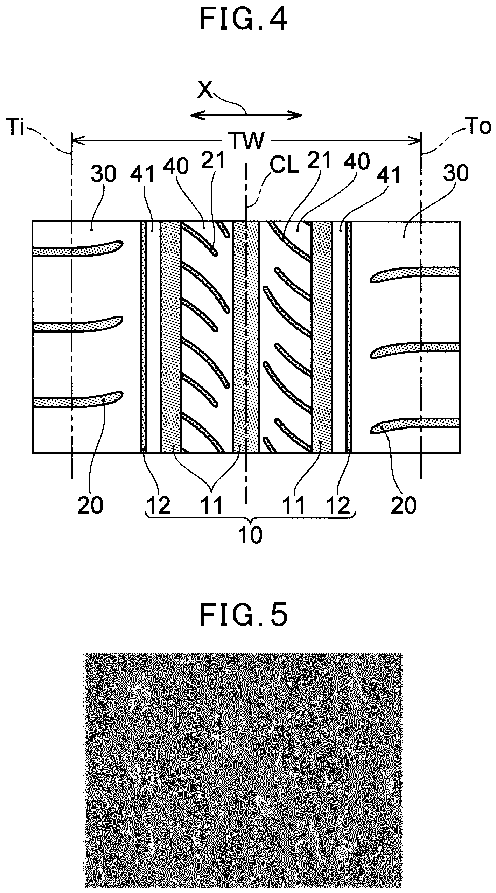

FIG. 4 is a development view of a tread part showing one embodiment of the present invention. FIG. 4 differs from FIG. 2 in that, in the pair of shoulder land parts 30, the lateral grooves 20 reach the tread grounding end at one end thereof, but do not reach the outermost circumferential groove at the other end thereof, and further, in the pair of center land parts 40 partitioned by the center circumferential groove 11, the lateral grooves (sipe) 21 reach a center circumferential groove 11 having a large distance from the tire center line C of two center circumferential grooves 11 partitioning each center land part at one end thereof, but stay in the land part without reaching a center circumferential groove 11 passing through the tire center line at the other end thereof.

(Production of rubber composition for topping)

The rubber composition for topping according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes.

The rubber composition for topping obtained by the above-described kneading is molded for use in coating an organic fiber cord. The method of molding is not particularly limited as long as, for a short fiber filler comprised in the rubber composition for topping, orientation directions of short fiber filler masses can be aligned, so that the dispersion V becomes 0.6 or less. Examples of such method include, for example, extruding the rubber composition obtained by the above-described kneading into a desired sheet-like shape. By adjusting degree of spread by rolling during the extrusion, the value of the dispersion V of the short fiber filler comprised in the rubber composition for topping can be adjusted. That is, the dispersion V tends to become small when spread by rolling is conducted at a higher level, and the dispersion V tends to become large when spread by rolling is conducted at a lower level. Therefore, a person skilled in the art can adjust the dispersion V to a desired value through limited trial and error.

<<Method of comprising short fiber filler>>

In the present invention, the short fiber filler can be comprised in the rubber composition by being kneaded in the similar manner as for other additives in the above-described kneading step, or as will be described below, it may be comprised in the rubber composition by being mixed with a rubber component as a wet masterbatch in advance, and then performing the above-described kneading using the wet masterbatch. Alternatively, the short fiber filler may be comprised in a cord-rubber composite by being applied to an organic fiber cord in advance.

<<Wet Masterbatch>>

A method of producing a wet masterbatch is not particularly limited, and for example, it can be prepared by mixing a rubber latex and a dispersion liquid of the above-described short fiber filler, and then solidifying and drying the mixture.

The rubber latex is not particularly limited, examples of which include an isoprene-based rubber latex such as a natural rubber latex, a synthetic diene-based rubber latex (latex of such as a BR, a SBR, a styrene-isoprene-butadiene rubber, an acrylonitrile-butadiene rubber, an ethylene vinyl acetate rubber, a chloroprene rubber, a vinyl pyridine rubber, and a butyl rubber), and the like. They may be used alone, or two or more thereof may be used in combination. Among them, a SBR latex, and an isoprene-based rubber latex such as latex of a NR, an epoxidized natural rubber (ENR), and an isoprene rubber (IR) are preferable, from the viewpoints of excellent breaking performance, low heat generation, and adhesiveness to a cord, etc.

The above-described rubber latex can be prepared by a conventionally known producing method, and a variety of commercially available products can also be used. As the above-described rubber latex, it is preferable to use one having a rubber solid content (a solid content concentration) of 5 to 80% by mass, more preferably 7% by mass or more, further preferably 10% by mass or more. Moreover, it is more preferably 70% by mass or less, further preferably 60% by mass or less, from the viewpoint of dispersibility of a short fibrous filler.

The dispersion liquid of the short fiber filler is obtained by dispersing the above-described short fiber filler in a solvent, and usually, water is appropriately used as the solvent, and, for example, other alcohols, ethers and ketones which are soluble in water can also be used. The dispersion liquid of the short fiber filler can be produced by a known method, and the production method is not particularly limited. For example, it can be prepared by dispersing the above-described short fiber filler in the above-described solvent using a high-speed homogenizer, an ultrasonic homogenizer, a high-pressure homogenizer, a colloid mill, a blender mill, or the like. Temperature and time during preparation can also be appropriately set within a range for normal practice so that the above-described short fiber filler is sufficiently dispersed in the above-described solvent.

A content (a solid content, a solid content concentration) of the short fiber filler in the above-described dispersion liquid of the short fiber filler is not particularly limited, but it is preferably 0.2% by mass or more, more preferably 0.3% by mass or more, further preferably 0.4% by mass or more, further preferably 0.5% by mass or more, in 100% by mass of the dispersion liquid of the short fiber filler, from the viewpoint of dispersibility of the short fiber filler in the dispersion liquid. On the other hand, the content is preferably 20% by mass or less, more preferably 10% by mass or less.

A mixing of the rubber latex and the dispersion liquid of the short fiber filler is not particularly limited as long as they are mixed, and other compounding agents such as binders other than the rubber latex and the dispersion liquid of the short fiber filler may be further added. A method of the mixing is not particularly limited, and it can be performed using a known stirring device such as, for example, a high-speed homogenizer, an ultrasonic homogenizer, a colloid mill, and a blender mill.

After the above-described mixing, the mixture is usually solidified. The solidifying step is usually performed by adding an acidic compound such as formic acid and sulfuric acid or a solidifying agent such as sodium chloride. Besides, in some cases, the mixture may be solidified by the above-described mixing, and in this case, a solidifying agent may not be used.

After solidification, usually, the obtained solidified product is collected, dehydrated by centrifugation or the like, and further washed and dried to obtain a wet masterbatch. Examples of a dryer that can be used for drying include a vacuum dryer, an air dryer, a drum dryer, a band dryer, a hot air dryer, a kiln type dryer, and the like.

The wet masterbatch thus obtained can be used in the similar manner as for other raw materials in the above-described kneading step.

(Production of cord-rubber composite)

The cord-rubber composite can be formed by a conventional method. For example, it is formed by coating, with a sheet obtained by molding the rubber composition for topping, both sides of a belt-like reed screen-shaped woven object, having parallel side edges, woven by a warp yarn made of organic fiber cords and a weft yarn. In this case, it is preferable that the rubber composition for topping coats an organic fiber cord so that an extrusion direction when molded into a sheet shape is made parallel to a length direction of the organic fiber cord. When the rubber composition for topping does not comprise a short fiber filler, the short fiber filler can be comprised by being applied on the organic fiber cord in advance. In this case, a dispersion V can be adjusted by an extrusion speed.

As the organic fiber cord which is a warp yarn, a cord in a range of 940 decitex/2 to 6600 decitex/2 can be usually used. As the weft yarn, yarn made of a heat-resistant material having substantially no melting point such as cotton and a flat rayon can be used, but a low melting point material having a melting point of 110 to 150°C can also be used. In this case, a straw-matting phenomenon in which the weft yarn melts under actions of heat and tension during tire vulcanization, which makes the warp yarn wavy, can be prevented. That is, under heat and pressure under a vulcanization temperature (about 150°C) of a tire, when the weft yarn has a melting point of 110 to 150°C, a binding force of the warp yarn can be reduced during vulcanization. Examples of a material of the weft yarn having a low melting point include, for example, a high-density polyethylene, a vinyl chloride/vinyl acetate copolymer, an ethylene/vinyl acetate copolymer, a terpolymer polyamide, a tetrapolymer polyamide, a multi-component copolymer polyamide, and the like. Also, usually 180 denier to 270 denier of yarn can be used. Here, the weft yarn is woven so as to maintain the warp yarn at regular intervals and prevent them from being separated from each other.

An array density of the organic fiber cord which is the warp yarn in the reed screen-shaped woven object is set by a required ply strength, etc., and in a case of a carcass ply, for example, a range of 40 to 70 yarn/5 cm is generally used. A thickness of the cord-rubber composite is preferably 0.8 mm or less. By setting the thickness to 0.8 mm or less, heat generation during running can be reduced. In addition, a weight of a pneumatic tire can be reduced by using the cord-rubber composite.

The reed screen-shaped woven object may be subjected to an adhesive treatment prior to being embedded in the rubber composition for topping. The adhesive treatment includes a dipping step of immersing the reed screen-shaped woven object in an adhesive treatment liquid and a heating step of heating (baking) it with the warp yarn being applied with a certain amount of tension after the dipping step, whereby improving the rubber adhesiveness of the reed screen-shaped woven object intended for use in tire reinforcement.

(Production of tire)

The tire of the present invention can be produced by a usual method using the cord-rubber composite. That is, it can be produced by attaching the cord-rubber composite together with other tire members and molding them by a usual method, on a tire molding machine, to form an unvulcanized tire, followed by heating and pressurizing this unvulcanized tire in a vulcanizer. The vulcanization condition is not particularly limited. Examples of vulcanization include, for example, a method of vulcanizing at 150 to 200°C for 10 to 30 minutes.

<Application>

The tire of the present invention can be appropriately used as a tire for a passenger car, a tire for a truck/bus, a tire for a two-wheeled vehicle, or a racing tire. Among them, it is preferably used as a tire for a passenger car. Besides, the tire for a passenger car is a tire on the premise that it is mounted on a car running on four wheels and refers to one having the maximum load capacity of 1000 kg or less. Moreover, the tire of the present invention can be used as an all-season tire, a summer tire, or a winter tire such as a studless tire. The tire of the present invention is preferably used as a run flat tire.

<Evaluation method>

The evaluation method of the present invention is a method of evaluating a degree of orientation of a short fiber filler in a molded product of a rubber composition comprising a short fiber filler, the method comprising:

(1) a step of cutting the rubber composition in a direction which is horizontal to an extrusion direction of molding of the rubber composition and which maximizes a cross section of the molded product, to cut out a cross section for observation,

(2) a step of imaging the cross section for observation with an electron microscope to obtain an electron microscope image,

(3) a step of extracting an image of only a short fiber filler mass from the electron microscope image,

(4) a step of measuring an angle $\theta$ defined by an orientation direction of each short fiber filler mass with respect to one arbitrarily determined reference direction, in the image of the short fiber filler mass,

(5) a step of calculating a dispersion V of an angle defined by the reference direction and the orientation direction of each short fiber filler mass by the following equation based on the angle $\theta$,

$$V = 1-R$$

$$R = \left| \frac{1}{N} \sum_{j} \exp(2i\theta_{j}) \right|$$

$$\{\theta_j \mid j = 1,2,\cdots, N\}$$

[wherein i represents an imaginary unit, N is the number of short fiber filler masses that can be confirmed from a range of a reference area of the electron microscope image of the cross section for observation, and $\theta$ represents an angle (radian) defined by the orientation direction of each short fiber filler mass with the reference direction in the cross section for observation.], and

(6) a step of evaluating a degree of orientation of the short fiber filler from the dispersion V.

According to the evaluation method of the present invention, in relation to a molded product of a rubber composition comprising a short fiber filler, focusing on a short fiber filler mass in which a plurality of short fiber fillers are aggregated in a cross section obtained by cutting the molded product in a predetermined plane, a degree of orientation of the short fiber filler mass can be evaluated by calculating a dispersion V, of an angle with respect to the orientation direction, obtained from a predetermined equation.

(Step (1))

The step (1) is a step of cutting the rubber composition in a direction which is horizontal to an extrusion direction of molding of the rubber composition and which maximizes a cross section of the molded product obtained by being extruded, to cut out a cross section for observation. By cutting out the cross section for observation in such manner, useful information regarding a degree of orientation of a short fiber filler is obtained. The cutout of the cross section for observation can be performed by a usual method. When the rubber composition is used as a cord-rubber composite for, for example, a carcass of a tire, etc., the cutout of the cross section for observation can be performed in a plane parallel to both a length direction of the cord and a width direction of an arrangement of the cord with respect to the organic fiber cord.

(Step (2))

The step (2) is a step of imaging the cross section for observation with an electron microscope to obtain an electron microscope image. The imaging with the electron microscope can be performed by a usual method. The electron microscope is not particularly limited, and a scanning electron microscope (SEM), a transmission electron microscope (TEM), or the like can be used.

(Step (3))

The step (3) is a step of extracting an image of only a short fiber filler mass from the electron microscope image. Such image extraction can be performed by a process of polarizing the image using, for example, a software such as Image J, setting a threshold value, and extracting only an image portion of a short fiber filler (CNF) mass, or the like.

(Step (4))

The step (4) is a step of measuring an angle θ defined by an orientation direction of each short fiber filler mass with respect to one arbitrarily determined reference direction, in the image of the short fiber filler mass. That is, in the obtained image of the short fiber filler mass, each short fiber filler mass is approximated to an ellipse, and as the major axis direction being an orientation direction of the short fiber filler mass, an angle (θ) defined by the orientation direction with the reference direction is measured. When the rubber composition is used as a cord-rubber composite for, for example, a carcass of a tire, etc., a length direction of an organic fiber cord can be set as a reference direction, and an angle (θ) defined with the reference direction can be measured.

(Step (5))

The step (5) is a step of calculating a dispersion V of an angle (θ) defined by the reference direction and the orientation direction of each short fiber filler mass by the following equation based on the angle (θ).

$$V = 1\text{-}R$$

$$R = \left| \frac{1}{N} \sum_j \exp\left(2i\theta_j\right) \right|$$

$$\{\theta_j \mid j = 1, 2, \cdots, N\}$$

[wherein i represents an imaginary unit, N is the number of short fiber filler masses that can be confirmed from a range of a reference area of the electron microscope image of the cross section for observation, and θ represents an angle (radian) defined by the orientation direction of each short fiber filler mass with the reference direction in the cross section for observation.]
Besides, the "range of the reference area" is as described above.

(Step (6))

The step (6) is a step of evaluating a degree of orientation of the short fiber filler from the dispersion V. As a result of evaluating the degree of orientation, it becomes possible to evaluate a useful function of the molded product of the rubber composition. For example, when a molded product of a rubber composition is combined as an organic fiber cord and used for a carcass of a tire, the degree of orientation can serve as one of indexes for evaluating ride comfort and steering stability during high speed running of the tire.
Unless there is no particular contradiction, this evaluation method can refer to descriptions of "tire", "production", and "use" in the present specification as descriptions of "evaluation method", and similarly, unless there is no particular contradiction, it can also refer to the descriptions of "evaluation method" as the descriptions of "tire", "production", and "use".

EXAMPLE

The present invention will be specifically described below based on Examples, but the present invention is not limited to Examples only.

<Various chemicals>

Various chemicals used in Examples and Comparative examples are collectively shown.

NR: Natural rubber (RSS#3 grade)
Carbon Black: DIABLACK N220 manufactured by Mitsubishi Chemical Corporation (average particle size: 23 nm, CTAB: 110 m$^2$/g, N$_2$SA: 114 m$^2$/g)
Oil: VivaTec 500 manufactured by H&R Group (TDAE oil)
Stearic acid: Bead stearic acid "CAMELLIA" manufactured by NOF CORPORATION

Zinc oxide: Zinc oxide No. 1 manufactured by Mitsui Mining & Smelting Co., Ltd.
Sulfur: Powdered sulfur manufactured by Karuizawa Sulfur Co, Ltd.
Vulcanization accelerator: Nocceler NS manufactured by Ouchi Shinko Chemical Industry Co., Ltd. (TBBS, N-tert-butyl-2-benzothiazolylsulfenamide)
Short fiber filler 1: Carbon Nanotube (CNT) (average fiber diameter: 5 nm, average fiber length: 6 μm, aspect ratio: 1200)
Short fiber filler 2: Cellulose Nanofiber (CNF) (average fiber diameter, average fiber length, and aspect ratio after preparation as a wet masterbatch are as described below)
Organic fiber cord A: Rayon fiber (1840 decitex/2)

Production example 1: Production of wet masterbatch (WMB) 1

A 10 kg of pure water was added to a 100 g of cellulose nanofiber (CNF) to prepare a 1.0% by mass (solid content concentration) of suspension of CNF, and the suspension was stirred for about 5 minutes with a high-speed homogenizer ("T50" manufactured by IKA Japan K.K., number of revolution: 8000 rpm) to prepare a uniform aqueous dispersion. After adjusting a solid content concentration (DRC) of a natural rubber latex to 10% by mass, the aqueous dispersion prepared above was added to 100 parts by mass of the rubber solid content of the natural rubber latex so that a dry weight (solid content) of CNF became 20 parts by mass, and the mixture was stirred for about 5 minutes at 25°C with a high-speed homogenizer ("T50" manufactured by IKA Japan K.K., number of revolution: 8000 rpm) to prepare a rubber latex dispersion (compound latex). Next, to the rubber latex dispersion, sulfuric acid was added while slowly stirring for 5 minutes at 25°C (Eurostar [electronically controlled stirrer] manufactured by IKA Japan K.K., number of revolution: 100 rpm) to adjust a pH to 3-4 for solidification. The obtained solid product was filtered and dried to obtain a wet masterbatch 1.

(Calculation of fiber diameter and fiber length)

A 0.001% by mass of aqueous dispersion of wet masterbatch 1 was prepared. This diluted dispersion was thinly spread on a sample table made of Mica and dried by heating at 50°C to prepare a sample for observation. The sample was observed with an atomic force microscope (AFM, manufactured by Hitachi High-Tech Science Corporation, product name: "Scanning probe microscope SPI3800N"). A fiber diameter and a fiber length were calculated by measuring a cross-sectional height of a shape image. An average fiber diameter was 200 nm, an average fiber length was 4 μm, and an aspect ratio [fiber length/fiber diameter] was 20.

<Production of unvulcanized rubber composition>

According to each compounding amount shown in Table 1, using a 1.7 L closed Banbury mixer, all chemicals other than sulfur and vulcanization accelerators were kneaded at a discharge temperature at 160°C for 4 minutes to obtain a kneaded product. Next, using an open roll, sulfur and vulcanization accelerators were added to the obtained kneaded product, and the mixture was kneaded for 4 minutes to obtain an unvulcanized rubber composition. In the rubber composition A and the rubber composition B, a matrix of short fiber fillers was rubber composition. On the other hand, a rubber composition C does not comprise a short fiber filler, and therefore, when a test tire was produced, the short fiber filler was comprised on an organic fiber cord as will be described later.
The unvulcanized rubber composition obtained above was molded into a sheet shape by extrusion molding. Depending on a degree of spread by rolling at the time of this extrusion, a value of a dispersion V of the angle was adjusted to be a predetermined value of 0.6 or less. On the other hand, in Comparative examples, adjustment of a dispersion V of the angle was conducted by a plurality of times of extrusion with the extrusion direction changed.

Table 1

(Rubber composition)

| | Rubber composition | | |
|---|---|---|---|
| | A | B | C |
| Part by mass | | | |
| NR | 100 | - | 100 |
| Short fiber filler 1 | 20 | - | - |
| WMB1 (NR solid content: 100 parts by mass) | - | 120 | - |

(continued)

(Rubber composition)

| | Rubber composition | | |
| --- | --- | --- | --- |
| | A | B | C |
| Part by mass | | | |
| (Short fiber filler 2: 20 parts by mass) | | | |
| Carbon black | 40 | 40 | 40 |
| Oil | 5 | 5 | 5 |
| Stearic acid | 2 | 2 | 2 |
| Zinc oxide | 2 | 2 | 2 |
| Sulfur | 2 | 2 | 2 |
| Vulcanization accelerator | 2 | 2 | 2 |

<Production of test tire in Table 2>

A tires was manufactured according to the descriptions in Table 2. That is, using an extruded product obtained by extruding the unvulcanized rubber composition A or rubber composition B into a sheet shape as described above, an organic fiber cord A was embedded with an array density of 50 yarns/5 cm to prepare a carcass having a thickness of 2.0 mm, and the carcass was attached together with other tire members to prepare a raw tire. The raw tire thus obtained was press-vulcanized for 20 minutes at 170°C to prepare a test tire (255/45RF18) which is a run flat tire. Besides, the tire weight was adjusted by changing a rubber gauge of the tread part.

<Production of test tire in Table 3>

A tire was manufactured according to the descriptions in Table 3. First, a short fiber filler 1 (CNT) was applied in advance to the organic fiber cord A and was thereby comprised thereon. That is, the matrix of short fiber fillers was the organic fiber cord. At this time, a dispersion V of the angle for a short fiber filler mass was adjusted by regulating an extrusion speed. A content of the short fiber filler 1 was adjusted to be the same as in the case for the test tire in Table 2 described above.
A test tire (255/45RF18) was obtained in the similar manner as in the production of the test tire in Table 2 described above, except that the organic fiber cord A comprising the CNT thus obtained and the unvulcanized rubber composition with the compounding C obtained above were used.

<Production of test tire in Table 4>

A tire was manufactured according to the descriptions in Table 4. That is, a test tire (255/45R18) was obtained in the similar manner as in the production of the test tire in Table 2 described above, except that the test tire was produced as a tire that was not a run flat tire.

<Evaluation>

Measurement methods and evaluation methods are shown below. Besides, an overall performance is evaluated based on a total value of a ride comfort index and a steering stability index during high speed running.

(Ride comfort)

Each test tire was mounted on all wheels of a domestic FF vehicle with a displacement of 2000 cc, and ride comfort when driving on a dry paved road was sensorily evaluated by a test driver from the viewpoints of ruggedness, push up from road surface, and damping. The evaluation was performed using an integer value of 1 to 5 points by ten test drivers based on evaluation criteria that the higher the score is, the more excellent the ride comfort is. A total score of the ten test drivers was calculated. A total score of reference Comparative examples was converted into a reference value (100), and an evaluation result for each test tire was indicated as an index in proportion to the total score.

<Steering stability during high-speed running>

Each test tire was mounted on all wheels of a domestic FF vehicle with a displacement of 2000 cc, and actual vehicle running was performed on a test course with a dry asphalt surface. Handling characteristics was evaluated based on each feeling of straight running, changing lanes, and accelerating/decelerating when running by a test driver at 120 km/h. The evaluation was performed using an integer value of 1 to 5 points by ten test drivers based on evaluation criteria that the higher the score is, the more excellent the handling characteristics is. A total score of the ten test drivers was calculated. A total score of reference Comparative examples was converted into a reference value (100), and an evaluation result for each test tire was indicated as an index in proportion to the total score.

(Dispersion V of short fiber filler)

A method of measuring a dispersion V of a short fiber filler is as follows.

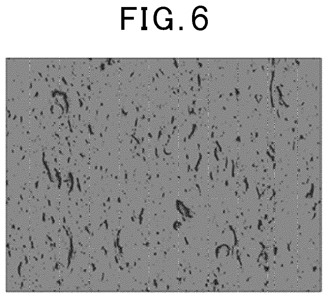

(1) For a carcass of a test tire, a rubber composition was cut in a plane parallel to both a length direction of a cord and a width direction of an arrangement of the cord with respect to an organic fiber cord to cut out a cross section for observation.
(2) The obtained cross section for observation was imaged with a scanning electron microscope (XL30 manufactured by FEI Company Japan Ltd.) at an acceleration voltage of 15 kV to obtain an electron microscope image. An image obtained for the test tire of Example 5 is shown in FIG. 5 (magnification: 500 times).
(3) The obtained electron microscope image was polarized using Image J, a threshold value was set, and an image portion of only a short fiber filler (CNF) mass was extracted. An image obtained for the test tire of Example 5 is shown in FIG. 6 (magnification: 500 times).
(4) In a range of 320 $\mu$m $\times$ 240 $\mu$m of the obtained image of the short fiber filler mass, each short fiber filler mass was approximated to an ellipse, and as the major axis direction being an orientation direction of a short fiber filler mass, an angle ($\theta$) defined by the orientation direction with a length direction (reference direction) of the organic fiber cord was measured.
(5) Based on the obtained angles ($\theta$), a dispersion V was calculated for the angle defined by the reference direction with the orientation direction of each short fiber filler mass by the above-described equation.

For each test tire, a dispersion V of a short fiber filler was calculated according to the above-described (1) to (5).

Table 2

Tire (255/45RF18, a matrix of short fiber fillers is a rubber composition)

| | | | Comparative example | | | | Example | | | | | | |
|---|---|---|---|---|---|---|---|---|---|---|---|---|---|
| | | | 1 | 2 | 3 | 4 | 1 | 2 | 3 | 4 | 5 | 6 | 7 |
| Carcass | | | | | | | | | | | | | |
| | Rubber composition for topping rubber | | A | A | A | A | A | A | A | A | B | A | A |
| | Short fiber filler mass | | | | | | | | | | | | |
| | | Matrix (rubber composition) | A | A | A | A | A | A | A | A | B | A | A |
| | | Type of short fiber filler | CNT | CNF | CNT | CNT | CNT | CNT | CNT | CNT | CNF | CNT | CNT |
| | | Dispersion V of angle | 0.74 | 0.8 | 0.88 | 0.43 | 0.59 | 0.43 | 0.43 | 0.26 | 0.21 | 0.26 | 0.26 |
| | | Aspect ratio | 2.5 | 2.1 | 2.2 | 2.7 | 2.7 | 3.2 | 3.2 | 3.0 | 3.0 | 3.0 | 3.0 |
| | Organic fiber cord | | A | A | A | A | A | A | A | A | A | A | A |
| | Angle $(\theta)$ (°) defined by length direction of organic fiber cord with orientation direction of short fiber filler mass | | 40 | 55 | 62 | 32 | 32 | 22 | 34 | 36 | 28 | 36 | 36 |
| Tire weight WT (kg) | | | 17 | 17 | 17 | 21 | 17 | 17 | 17 | 17 | 17 | 18 | 16 |
| Maximum load capacity $W_L$ (kg) | | | 678 | 678 | 678 | 678 | 678 | 678 | 678 | 678 | 678 | 678 | 678 |
| WT/$W_L$ | | | 0.025 | 0.025 | 0.025 | 0.031 | 0.025 | 0.025 | 0.025 | 0.025 | 0.025 | 0.027 | 0.024 |
| Tire cross-sectional width (Wmm) | | | 255 | 255 | 255 | 255 | 255 | 255 | 255 | 255 | 255 | 255 | 255 |
| $(Dt^2 \times \pi/4)$ / W | | | 1454 | 1454 | 1454 | 1454 | 1454 | 1454 | 1454 | 1454 | 1454 | 1454 | 1454 |
| Evaluation on tire | | | | | | | | | | | | | |
| | Ride comfort index | | 100 | 94 | 90 | 78 | 110 | 108 | 116 | 118 | 114 | 116 | 120 |
| | Steering stability index during high speed running | | 100 | 94 | 92 | 88 | 114 | 122 | 110 | 118 | 124 | 116 | 118 |

Table 3

Tire (255/45RF18, a matrix of short fiber fillers is an organic fiber cord)

| | | Comparative example | Example | | |
|---|---|---|---|---|---|
| | | 5 | 8 | 9 | 10 |
| Carcass | | | | | |
| Rubber composition for topping rubber | | C | C | C | C |
| Short fiber filler mass | | | | | |
| | Matrix (organic fiber cord) | A | A | A | A |
| | Type of short fiber filler | CNT | CNT | CNT | CNT |
| | Dispersion V of angle | 0.84 | 0.52 | 0.57 | 0.27 |
| | Aspect ratio | 2.3 | 2.1 | 2.2 | 1.8 |
| | Organic fiber cord | A | A | A | A |
| | Angle ($\theta$) (°) defined by length direction of organic fiber cord with orientation direction of short fiber filler mass | 44 | 29 | 33 | 27 |
| Tire weight WT (kg) | | 17 | 17 | 17 | 17 |
| Maximum load capacity $W_L$ (kg) | | 678 | 678 | 678 | 678 |
| $WT/W_L$ | | 0.025 | 0.025 | 0.025 | 0.025 |
| Tire cross-sectional width (Wmm) | | 255 | 255 | 255 | 255 |
| ($Dt^2 \times$ -rr/4) / W | | 1454 | 1454 | 1454 | 1454 |
| Evaluation on tire | | | | | |
| | Ride comfort index | 100 | 112 | 110 | 122 |
| | Steering stability index during high speed running | 100 | 122 | 122 | 124 |

Table 4

Tire (255/45RF18, a matrix of short fiber fillers is a rubber composition)

| | | | Comparative example | | | | Example | | | | |
|---|---|---|---|---|---|---|---|---|---|---|---|
| | | | 6 | 7 | 8 | 11 | 12 | 13 | 14 | 15 | 16 |
| Carcass | | | | | | | | | | | |
| | Rubber composition for topping rubber | | A | A | A | A | A | A | A | B | A |
| | Short fiber filler mass | | | | | | | | | | |
| | | Matrix (rubber composition) | A | A | A | A | A | A | A | B | A |
| | | Type of short fiber filler | CNT | CNF | CNT | CNT | CNT | CNT | CNT | CNF | CNT |
| | | Dispersion V of angle | 0.76 | 0.81 | 0.90 | 0.58 | 0.44 | 0.46 | 0.23 | 0.16 | 0.24 |
| | | Aspect ratio | 2.4 | 2.2 | 2.2 | 2.7 | 3.3 | 3.2 | 3.0 | 3.0 | 3.0 |
| | Organic fiber cord | | A | A | A | A | A | A | A | A | A |
| | Angle ($\theta$) (°) defined by length direction of organic fiber cord with orientation direction of short fiber filler mass | | 38 | 57 | 63 | 30 | 20 | 35 | 37 | 29 | 36 |
| Tire weight WT (kg) | | | 13 | 13 | 13 | 13 | 13 | 16 | 13 | 13 | 8 |
| Maximum load capacity $W_L$ (kg) | | | 678 | 678 | 678 | 678 | 678 | 678 | 678 | 678 | 678 |
| WT/$W_L$ | | | 0.019 | 0.019 | 0.019 | 0.019 | 0.019 | 0.024 | 0.019 | 0.019 | 0.012 |
| Tire cross-sectional width (Wmm) | | | 255 | 255 | 255 | 255 | 255 | 255 | 255 | 255 | 255 |
| $(Dt^2 \times \text{-rr}/4) / W$ | | | 1454 | 1454 | 1454 | 1454 | 1454 | 1454 | 1454 | 1454 | 1454 |
| Evaluation on tire | | | | | | | | | | | |
| | Ride comfort index | | 100 | 94 | 92 | 110 | 110 | 116 | 120 | 112 | 122 |
| | Steering stability index during high speed running | | 100 | 94 | 90 | 112 | 122 | 110 | 118 | 124 | 116 |

From the results in Tables 2 to 4, when a degree of orientation of a short fiber filler mass is evaluated by a dispersion V, it can be seen that, in the tires of Examples in which the dispersion V is 0.6 or less and the tire weight WT is 20 kg or less, they achieve both excellent ride comfort and steering stability during high speed running, as compared with Comparative examples.

<Embodiments>

Examples of embodiments of the present invention are shown below.

[1] A tire comprising a cord-rubber composite,

wherein the tire has a tire weight (WT) of 20 kg or less, preferably 19 kg or less, more preferably 18 kg or less, further preferably 17 kg or less, further preferably 16 kg or less,
wherein the cord-rubber composite comprises an organic fiber cord, a topping rubber coating the organic fiber cord, and a short fiber filler, and
wherein the short fiber filler has a dispersion V, as defined below, of 0.6 or less, preferably 0.5 or less, more preferably 0.4 or less:

$$V = 1 - R$$

$$R = \left| \frac{1}{N} \sum_j \exp(2i\theta_j) \right|$$

$$\{\theta_j \mid j = 1, 2, \cdots, N\}$$

[wherein i represents an imaginary unit, N is the number of short fiber filler masses that can be confirmed from a range of a reference area of an electron microscope image in a cross section of a topping rubber cut out in a plane parallel to both a length direction of the cord and a width direction of an arrangement of the cord with respect to the organic fiber cord, and $\theta$ represents an angle (radian) defined by an orientation direction of each short fiber filler mass with a length direction of the organic fiber cord in the cross section of the topping rubber.]

(2) The tire of [1] above, wherein a ratio (WT/$W_L$) of a tire weight (WT) to a maximum load capacity ($W_L$) as defined below is preferably 0.027 or less, more preferably 0.025 or less, further preferably 0.024 or less, further preferably 0.020 or less, further preferably 0.019 or less:

$$W_L = 0.000011 \times VT + 100$$

[wherein VT is a virtual volume (mm$^3$) of the tire when an internal pressure of 250 kPa is applied, and is calculated by the following equation:

$$VT = \{(Dt^2 - r^2) / 4 \times \pi\} \times W$$

Dt: Tire outer diameter (mm)
r: Tire inner diameter (mm)
$\pi$: Circular constant
W: Tire cross-sectional width (mm)]

[3] The tire of [1] or [2] above, wherein the short fiber filler mass has an average aspect ratio of 3.0 or more as defined below:

$$\text{Average aspect ratio} = (\text{mean value of major axis of short fiber filler}$$

$$\text{mass}) / (\text{mean value of minor axis of short fiber filler mass})$$

[4] The tire of any one of [1] to [3] above, wherein an average of the angle (radian) defined by the length direction of the organic fiber cord and the orientation direction of each short fiber filler mass is $\pi/4$ or less, preferably $\pi/5$ or less, more preferably $\pi/6$ or less.

[5] The tire of any one of [1] to [4] above, wherein the short fiber filler is at least one selected from the group consisting of a cellulose nanofiber and a carbon nanotube.

[6] The tire of any one of [1] to [5] above, wherein the tire has a cross-sectional width W of 150 mm to 290 mm, preferably 160 mm to 280 mm, more preferably 170 mm to 270 mm.

[7] The tire of any one of [1] to [6] above, wherein a carcass comprises the cord-rubber composite.

[8] The tire of any one of [1] to [7] above, wherein the tire outer diameter Dt and the tire cross-sectional width W satisfy the following inequality (1), preferably with "1963.4" replaced with "1970" and "2827.4" replaced with "2800", more preferably with "1963.4" replaced with "2070" and "2827.4" replaced with "2700":

$$1963.4 \leqq (Dt^2 \times \pi/4) / Wt \leqq 2827.4 \ (1)$$

[9] The tire of any one of [1] to [8] above, the tire comprising a tread part,

the tread part having a tread end To being outside a vehicle and a tread end Ti being inside the vehicle when mounted on the vehicle, and having, between the tread end To and the tread end Ti, two or more circumferential grooves extending continuously in a tire circumferential direction, and a pair of shoulder land parts partitioned by a pair of outermost circumferential grooves placed outermost in a tire width direction among the circumferential grooves and one or more center land parts located between the pair of shoulder land parts,
the pair of shoulder land parts and the one or more center land parts having a plurality of lateral grooves extending in the tire width direction, respectively,
wherein, with respect to a lateral groove of at least one shoulder land part among the pair of shoulder land parts, one end of the lateral groove reaches a tread grounding end, and the other end stays in the land part without reaching the outermost circumferential groove.

[10] The tire of [9] above, wherein, with respect to a lateral groove of at least one the center land part among the one or more center land parts, one end of the lateral groove connects with one of the two circumferential grooves partitioning the center land part, and the other end stays in the land part without reaching the other circumferential groove.

[11] The tire of [10] above, wherein the two circumferential grooves partitioning the center land part are composed of a circumferential groove having a large distance from a tire center line and a circumferential groove having a small distance from the tire center line, the circumferential groove with which the lateral groove connects being the circumferential groove having the large distance from the tire center line.

[12] The tire of any one of [1] to [11] above, wherein the tire is a run flat tire.

[13] A method of evaluating a degree of orientation of a short fiber filler in a molded product of a rubber composition comprising the short fiber filler, the method comprising:

(1) a step of cutting the rubber composition in a direction which is horizontal to an extrusion direction of molding of the rubber composition and which maximizes a cross section of the molded product, to cut out a cross section for observation,
(2) a step of imaging the cross section for observation with an electron microscope to obtain an electron microscope image,
(3) a step of extracting an image of only a short fiber filler mass from the electron microscope image,
(4) a step of measuring an angle $\theta$ defined by an orientation direction of each short fiber filler mass with respect to one arbitrarily determined reference direction, in the image of the short fiber filler mass,
(5) a step of calculating a dispersion V of an angle defined by the reference direction and the orientation direction of each short fiber filler mass by the following equation based on the angle $\theta$,

$$V = 1\text{-}R$$

$$R = \left| \frac{1}{N} \sum_j \exp\left(2i\theta_j\right) \right|$$

$$\{\theta_j \,|\, j = 1, 2, \cdots, N\}$$

[wherein i represents an imaginary unit, N is the number of short fiber filler masses that can be confirmed from a range of a reference area of the electron microscope image of the cross section for observation, and θ represents an angle (radian) defined by the orientation direction of each short fiber filler mass with the reference direction in the cross section for observation.], and

(6) a step of evaluating a degree of orientation of the short fiber filler from the dispersion V.

REFERENCE SIGNS LIST

1. Tire
2. Tread part
3. Sidewall part
4. Breaker
5. Carcass
6. Inner liner
7. Side reinforcing rubber
8. Bead part
9. Clinch
C. Tire center line
J. Rim
10. Circumferential groove
11. Center circumferential groove
12. Outermost circumferential groove
20. Lateral groove
21. Lateral groove (Sipe)
30. Shoulder land part
40. Center land part
41. Center land part
Ti. Inner tread end
To. Outer tread end
TW. Tread width
X. Tire width direction

It is an object of the present invention to provide a tire that achieves both ride comfort and steering stability during high speed running. Provided is a tire comprising a cord-rubber composite, wherein the tire has a tire weight (WT) of 20 kg or less, wherein the cord-rubber composite comprises an organic fiber cord, a topping rubber coating the organic fiber cord, and a short fiber filler, and wherein the short fiber filler has a dispersion V of 0.6 or less defined by the predetermined equation.

## Claims

1. A tire (1) comprising a cord-rubber composite,

   wherein the tire (1) has a tire weight (WT) of 20 kg or less, the WT is a weight of the single tire not including a weight of a rim; when the lumen of the tire is provided with a member made of a sponge or sealant, a sensor member, or the like, the weight includes them,
   wherein the cord-rubber composite comprises an organic fiber cord, a topping rubber coating the organic fiber cord, and a short fiber filler,

**characterized in that**
the short fiber filler has a dispersion V of 0.6 or less defined as follows:

$$V = 1-R$$

$$R = \left| \frac{1}{N} \sum_j \exp(2i\theta_j) \right|$$

$$\{\theta_j \mid j = 1, 2, \cdots, N\}$$

[wherein i represents an imaginary unit, N is the number of short fiber filler masses that can be confirmed from a range of a reference area of an electron microscope image in a cross section of a topping rubber cut out in a plane parallel to both a length direction of the cord and a width direction of an arrangement of the cord with respect to the organic fiber cord, and $\theta$ represents an angle (radian) defined by an orientation direction of each short fiber filler mass with a length direction of the organic fiber cord in the cross section of the topping rubber.]

2. The tire (1) of claim 1, wherein a ratio ($WT/W_L$) of a tire weight (WT) to a maximum load capacity ($W_L$) as defined below is 0.027 or less:

$$W_L = 0.000011 \times VT + 100$$

[wherein VT is a virtual volume ($mm^3$) of the tire when an internal pressure of 250 kPa is applied, and is calculated by the following equation:

$$VT = \{(Dt^2 - r^2) / 4 \times \pi\} \times W$$

Dt: Tire outer diameter (mm), measured in the standardized state
r: Tire inner diameter (mm), measured in the standardized state
$\pi$: Circular constant
W: Tire cross-sectional width (mm), measured in the standardized state, wherein the "standardized state" is a state where the tire is rim-assembled on a standardized rim and a standardized internal pressure is filled, and no load is applied].

3. The tire (1) of claim 1 or 2, wherein the short fiber filler mass has an average aspect ratio of 3.0 or more as defined below:

Average aspect ratio = (mean value of major axis of short fiber filler mass) / (mean value of minor axis of short fiber filler mass)

4. The tire (1) of any one of claims 1 to 3, wherein an average of the angle (radian) defined by the length direction of the organic fiber cord with the orientation direction of each short fiber filler mass is $\pi/4$ or less.

5. The tire (1) of any one of claims 1 to 4, wherein the short fiber filler is at least one selected from the group consisting of a cellulose nanofiber and a carbon nanotube.

6. The tire (1) of any one of claims 1 to 5, wherein the tire has a cross-sectional width W of 150 mm to 290 mm.

7. The tire (1) of any one of claims 1 to 6, wherein a carcass comprises the cord-rubber composite.

8. The tire (1) of any one of claims 1 to 7, wherein the tire outer diameter Dt and the tire cross-sectional width W satisfy the following inequality (1):

$$1963.4 \leqq (Dt^2 \times \pi/4) / Wt \leqq 2827.4 \quad (1)$$

9. The tire (1) of any one of claims 1 to 8, the tire comprising a tread part (2),

the tread part (2) having a tread end (To) being outside a vehicle and a tread end (Ti) being inside the vehicle when mounted on the vehicle, and having, between the tread end To and the tread end Ti, two or more circumferential grooves (10) extending continuously in a tire circumferential direction, and a pair of shoulder land parts (30) partitioned by a pair of outermost circumferential grooves (12) placed outermost in a tire width direction among the circumferential grooves (10) and one or more center land parts (40; 41) located between the pair of shoulder land parts (30),
the pair of shoulder land parts (30) and the one or more center land parts (40; 41) having a plurality of lateral grooves (20; 21) extending in the tire width direction, respectively,
wherein, with respect to a lateral groove (20; 21) of at least one shoulder land part (30) among the pair of shoulder land parts (30), one end of the lateral groove (20; 21) reaches a tread grounding end, and the other end stays in the land part (30) without reaching the outermost circumferential groove (12).

10. The tire (1) of claim 9, wherein, with respect to a lateral groove (20; 21) of at least one the center land part (40; 41) among the one or more center land parts (40; 41), one end of the lateral groove (20; 21) connects with one of the two circumferential grooves (10) partitioning the center land part (40; 41), and the other end stays in the land part without reaching the other circumferential groove (10).

11. The tire (1) of claim 10, wherein the two circumferential grooves (10) partitioning the center land part (40; 41) are composed of a circumferential groove (10) having a large distance from a tire center line (C) and a circumferential groove (10) having a small distance from the tire center line (C), the circumferential groove (10) with which the lateral groove (20; 21) connects being the circumferential groove (10) having the large distance from the tire center line (C).

12. The tire (1) of any one of claims 1 to 11, wherein the tire (1) is a run flat tire.

13. A method of evaluating a degree of orientation of a short fiber filler in a molded product of a rubber composition comprising the short fiber filler, the method comprising:

(1) a step of cutting the rubber composition in a direction which is horizontal to an extrusion direction of molding of the rubber composition and which maximizes a cross section of the molded product, to cut out a cross section for observation,
(2) a step of imaging the cross section for observation with an electron microscope to obtain an electron microscope image,
(3) a step of extracting an image of only a short fiber filler mass from the electron microscope image,
(4) a step of measuring an angle $\theta$ defined by an orientation direction of each short fiber filler mass with respect to one arbitrarily determined reference direction, in the image of the short fiber filler mass,
(5) a step of calculating a dispersion V of an angle defined by the reference direction and the orientation direction of each short fiber filler mass by the following equation based on the angle $\theta$,

$$V = 1-R$$

$$R = \left| \frac{1}{N} \sum_j \exp\left(2i\theta_j\right) \right|$$

$$\{\theta_j \mid j = 1,2,\cdots, N\}$$

[wherein i represents an imaginary unit, N is the number of short fiber filler masses that can be confirmed from a range of a reference area of the electron microscope image of the cross section for observation, and $\theta$ represents an angle (radian) defined by the orientation direction of each short fiber filler mass with the reference direction in the cross section for observation.], and

(6) a step of evaluating a degree of orientation of the short fiber filler from the dispersion V.

**Patentansprüche**

1. Reifen (1), der einen Cord-Kautschuk-Verbundstoff umfasst,

   wobei der Reifen (1) ein Reifengewicht (WT) von 20 kg oder weniger aufweist, wobei das WT ein Gewicht des einzelnen Reifens ist, das ein Gewicht einer Felge nicht einschließt; wenn das Lumen des Reifens mit einem Element aus einem Schwamm oder einem Dichtmittel, einem Sensorelement oder dergleichen versehen ist, schließt das Gewicht diese ein,
   wobei der Cord-Kautschuk-Verbundstoff einen organischen Fasercord, einen den organischen Fasercord beschichtenden Deckkautschuk und einen Kurzfaserfüllstoff umfasst,
   **dadurch gekennzeichnet, dass**
   der Kurzfaserfüllstoff eine Dispersion V von 0,6 oder weniger aufweist, die wie folgt definiert ist:

   $$V = 1-R$$

   $$R = \left| \frac{1}{N} \sum_j \exp(2i\theta_j) \right|$$

   $$\{\theta j \mid j = 1,2,\cdots, N\}$$

   [wobei i eine imaginäre Einheit darstellt, N die Anzahl der Kurzfaserfüllmassen ist, die aus einem Bereich einer Referenzfläche eines elektronenmikroskopischen Bildes in einem Querschnitt eines Überzugskautschuks bestätigt werden können, der in einer Ebene parallel zu sowohl einer Längsrichtung des Cords als auch einer Breitenrichtung einer Anordnung des Cords in Bezug auf den organischen Fasercord ausgeschnitten ist, und θ einen Winkel (Radiant) darstellt, der durch eine Orientierungsrichtung jeder Kurzfaserfüllmasse mit einer Längsrichtung des organischen Fasercords in dem Querschnitt des Überzugskautschuks definiert ist].

2. Reifen (1) nach Anspruch 1, wobei das Verhältnis $(WT/W_L)$ zwischen dem Reifengewicht (WT) und der maximalen Tragfähigkeit $(W_L)$, wie unten definiert, 0,027 oder weniger beträgt:

   $$W_L = 0,000011 \times VT + 100$$

   [wobei VT ein virtuelles Volumen $(mm^3)$ des Reifens ist, wenn ein Innendruck von 250 kPa anliegt, und durch die folgende Gleichung berechnet wird

   $$VT = \{(Dt^2-r^2) / 4 \times \pi\} \times W$$

   Dt: Außendurchmesser des Reifens (mm), gemessen im genormten Zustand,
   r: Reifeninnendurchmesser (mm), gemessen im genormten Zustand
   $\pi$: Kreiskonstante
   W: Querschnittsbreite des Reifens (mm), gemessen im genormten Zustand, wobei der "genormte Zustand" ein Zustand ist, in dem der Reifen auf eine genormte Felge montiert ist, ein genormter Innendruck herrscht und keine Last aufgebracht wird].

3. Reifen (1) nach Anspruch 1 oder 2, wobei die Kurzfaserfüllmasse ein durchschnittliches Seitenverhältnis von 3,0 oder mehr aufweist, wie nachstehend definiert:

$$\text{Durchschnittliches Streckungsverhältnis} = \text{(Mittelwert der Hauptachse der Kurzfaserfüllmasse)} / \text{(Mittelwert der Nebenachse der Kurzfaserfüllmasse)}$$

**4.** Reifen (1) nach einem der Ansprüche 1 bis 3, wobei ein Durchschnitt des Winkels (Radiant), der durch die Längsrichtung des organischen Fasercords mit der Orientierungsrichtung jeder Kurzfaserfüllmasse definiert ist, $\pi/4$ oder weniger beträgt.

**5.** Reifen (1) nach einem der Ansprüche 1 bis 4, wobei der Kurzfaserfüllstoff mindestens einer ist, der aus der Gruppe ausgewählt ist, die aus einer Cellulose-Nanofaser und einem Kohlenstoff-Nanoröhrchen besteht.

**6.** Reifen (1) nach einem der Ansprüche 1 bis 5, wobei der Reifen eine Querschnittsbreite W von 150 mm bis 290 mm aufweist.

**7.** Reifen (1) nach einem der Ansprüche 1 bis 6, wobei eine Karkasse den Cord-Kautschuk-Verbundstoff umfasst.

**8.** Reifen (1) nach einem der Ansprüche 1 bis 7, wobei der Reifenaußendurchmesser Dt und die Reifenquerschnittsbreite W die folgende Ungleichung (1) erfüllen:

$$1963,4 \leqq (Dt^2 \times \pi/4) / Wt \leqq 2827,4 \ (1)$$

**9.** Reifen (1) nach einem der Ansprüche 1 bis 8, wobei der Reifen einen Laufflächenteil (2) aufweist,

wobei der Laufflächenteil (2) ein Laufflächenende (To) aufweist, das sich außerhalb eines Fahrzeugs befindet, und ein Laufflächenende (Ti), das sich innerhalb des Fahrzeugs befindet, wenn es auf dem Fahrzeug montiert ist, und zwischen dem Laufflächenende To und dem Laufflächenende Ti zwei oder mehr Umfangsrillen (10) aufweist, die sich kontinuierlich in einer Reifenumfangsrichtung erstrecken, und ein Paar Schulterstegteile (30), die durch ein Paar äußerster Umfangsrillen (12), die in einer Reifenbreitenrichtung am weitesten außen unter den Umfangsrillen (10) angeordnet sind, und einen oder mehrere Mittelstegteile (40; 41), die zwischen dem Paar von Schulterstegteilen (30) angeordnet sind,
wobei das Paar von Schulterstegteilen (30) und das eine oder die mehreren Mittelstegteile (40; 41) eine Vielzahl von seitlichen Rillen (20; 21) aufweisen, die sich jeweils in der Reifenbreitenrichtung erstrecken,
wobei in Bezug auf eine seitliche Rille (20; 21) von mindestens einem Schulterstegteil (30) des Paars von Schulterstegteilen (30) ein Ende der seitlichen Rille (20; 21) ein Laufflächenbodenende erreicht und das andere Ende in dem Stegteil (30) verbleibt, ohne die äußerste Umfangsrille (12) zu erreichen.

**10.** Reifen (1) nach Anspruch 9, wobei in Bezug auf eine seitliche Rille (20; 21) von mindestens einem der mittleren Stegteile (40; 41) unter den einen oder mehreren mittleren Stegteilen (40; 41) ein Ende der seitlichen Rille (20; 21) mit einer der beiden Umfangsrillen (10) verbunden ist, die das mittlere Stegteil (40; 41) unterteilen, und das andere Ende in dem Stegteil bleibt, ohne die andere Umfangsrille (10) zu erreichen.

**11.** Reifen (1) nach Anspruch 10, wobei die zwei Umfangsrillen (10), die den mittleren Stegteil (40; 41) unterteilen, aus einer Umfangsrille (10), die einen großen Abstand von einer Reifenmittellinie (C) hat, und einer Umfangsrille (10), die einen kleinen Abstand von der Reifenmittellinie (C) hat, zusammengesetzt sind, wobei die Umfangsrille (10), mit der sich die seitliche Rille (20; 21) verbindet, die Umfangsrille (10) mit dem großen Abstand von der Reifenmittellinie (C) ist.

**12.** Reifen (1) nach einem der Ansprüche 1 bis 11, wobei der Reifen (1) ein Notlaufreifen ist.

**13.** Verfahren zur Bewertung des Orientierungsgrades eines Kurzfaserfüllstoffs in einem geformten Produkt aus einer Kautschukzusammensetzung, die den Kurzfaserfüllstoff enthält, wobei das Verfahren umfasst:

(1) einen Schritt des Schneidens der Kautschukzusammensetzung in einer Richtung, die horizontal zu einer Extrusionsrichtung des Formens der Kautschukzusammensetzung ist und die einen Querschnitt des geformten Produkts maximiert, um einen Querschnitt zur Beobachtung auszuschneiden,

(2) einen Schritt der Abbildung des Querschnitts zur Beobachtung mit einem Elektronenmikroskop, um ein elektronenmikroskopisches Bild zu erhalten,

(3) einen Schritt des Extrahierens eines Bildes von nur einer kurzen Faserfüllmasse aus dem Elektronenmikroskopbild,

(4) einen Schritt des Messens eines Winkels θ, der durch eine Orientierungsrichtung jeder Kurzfaserfüllmasse in Bezug auf eine willkürlich bestimmte Referenzrichtung definiert ist, in dem Bild der Kurzfaserfüllmasse,

(5) einen Schritt des Berechnens einer Dispersion V eines Winkels, der durch die Referenzrichtung und die Orientierungsrichtung jeder Kurzfaserfüllmasse definiert ist, durch die folgende Gleichung auf der Grundlage des Winkels θ,

$$V = 1\text{-}R$$

$$R = \left| \frac{1}{N} \sum_j \exp(2i\theta_j) \right|$$

$$\{\theta j \mid j = 1,2,\cdots, N\}$$

[wobei i eine imaginäre Einheit darstellt, N die Anzahl der Kurzfaserfüllmassen ist, die aus einem Bereich einer Referenzfläche des elektronenmikroskopischen Bildes des Beobachtungsquerschnitts bestätigt werden können, und θ einen Winkel (Radiant) darstellt, der durch die Orientierungsrichtung jeder Kurzfaserfüllmasse mit der Referenzrichtung in dem Beobachtungsquerschnitt definiert ist], und

(6) einen Schritt des Auswertens eines Orientierungsgrads des Kurzfaserfüllstoffs aus der Dispersion V.

## Revendications

1. Pneu (1) comprenant un composite de corde et caoutchouc,

dans lequel le pneu (1) a un poids de pneu (WT) inférieur ou égal à 20 kg, le WT étant un poids du seul pneu à l'exclusion du poids d'une jante ; lorsque la chambre du pneu est pourvue d'un élément réalisé en éponge ou en matériau d'étanchéité, d'un élément de détection ou analogue, le poids les inclut,

dans lequel le composite de corde et caoutchouc comprend une corde de fibres organiques, un caoutchouc de gommage recouvrant la corde de fibres organiques, et une charge de fibres courtes,

**caractérisé en ce que**

la charge de fibres courtes a une dispersion V inférieure ou égale à 0,6 définie comme suit :

$$V = 1 - R$$

$$R = \left| \frac{1}{N} \sum_j \exp(2i\theta_j) \right|$$

$$\{\theta_j \mid j = 1,2,..., N\}$$

[dans laquelle i représente une unité imaginaire, N est le nombre de masses de charge de fibres courtes qui peut être confirmé à partir d'une plage d'une zone de référence d'une image de microscope électronique dans une section transversale d'un caoutchouc de gommage découpée dans un plan parallèle à la fois à une direction de longueur de la corde et à une direction de largeur d'un agencement de la corde par rapport à la corde de fibres organiques, et θ représente un angle (radian) défini par une direction d'orientation de chaque masse de charge de fibres courtes avec une direction de longueur de la corde de fibres organiques dans la section transversale du caoutchouc de garniture.]

**2.** Pneu (1) selon la revendication 1, dans lequel un rapport (WT/W$_L$) entre un poids de pneu (WT) et une capacité de charge maximale (W$_L$) telle que définie ci-dessous est inférieur ou égal à 0,027 :

$$W_L = 0,000011 \times VT + 100$$

[dans lequel VT est un volume virtuel (mm$^3$) du pneu lorsqu'une pression interne de 250 kPa est appliquée, et est calculé par l'équation suivante :

$$VT = \{(Dt^2-r^2) / 4 \times \pi\} \times W$$

Dt : diamètre externe du pneu (mm), mesuré à l'état normalisé
r : diamètre interne du pneu (mm), mesuré à l'état normalisé
$\pi$ : constante circulaire
W: largeur de section transversale du pneu (mm), mesurée à l'état normalisé, « l'état normalisé » étant un état dans lequel le pneu est assemblé sur une jante normalisée et une pression interne normalisée est remplie, et aucune charge n'est appliquée].

**3.** Pneu (1) selon la revendication 1 ou 2, dans lequel la masse de charge de fibres courtes présente un rapport d'aspect moyen supérieur ou égal à 3,0, tel que défini ci-dessous :

rapport d'aspect moyen = (valeur moyenne du grand axe de la masse de charge de fibres courtes) / (valeur moyenne du petit axe de la masse de charge de fibres courtes).

**4.** Pneu (1) selon l'une quelconque des revendications 1 à 3, dans lequel une moyenne de l'angle (radian) défini par la direction de longueur de la corde de fibres organiques avec la direction d'orientation de chaque masse de charge de fibres courtes est inférieure ou égale à $\pi/4$.

**5.** Pneu (1) selon l'une quelconque des revendications 1 à 4, dans lequel la charge de fibres courtes est au moins une charge choisie dans le groupe constitué par une nanofibre de cellulose et un nanotube de carbone.

**6.** Pneu (1) selon l'une quelconque des revendications 1 à 5, dans lequel le pneu présente une largeur transversale W de 150 mm à 290 mm.

**7.** Pneu (1) selon l'une quelconque des revendications 1 à 6, dans lequel une carcasse comprend le composite de corde et caoutchouc.

**8.** Pneu (1) selon l'une quelconque des revendications 1 à 7, dans lequel le diamètre externe de pneu Dt et la largeur transversale de pneu W satisfont à l'inégalité suivante (1) :

$$1\,963,4 \le (Dt^2 \times \pi/4) / Wt \le 2\,827,4 \quad (1)$$

**9.** Pneu (1) selon l'une quelconque des revendications 1 à 8, le pneu comprenant une partie bande de roulement (2),

la partie bande de roulement (2) ayant une extrémité de bande de roulement (To) étant à l'extérieur d'un véhicule et une extrémité de bande de roulement (Ti) étant à l'intérieur du véhicule lorsqu'elle est montée sur le véhicule, et ayant, entre l'extrémité de bande de roulement To et l'extrémité de bande de roulement Ti, deux rainures circonférentielles ou plus (10) s'étendant continuellement dans une direction circonférentielle du pneu, et une paire de parties de méplat d'épaulement (30) cloisonnées par une paire de rainures circonférentielles les plus extérieures (12) placées le plus à l'extérieur dans une direction de largeur de pneu parmi les rainures circonférentielles (10) et une ou plusieurs parties de méplat centrales (40 ; 41) situées entre la paire de parties de méplat d'épaulement (30),
la paire de parties de méplat d'épaulement (30) et les une ou plusieurs parties de méplat centrales (40 ; 41) comportant une pluralité de rainures latérales (20 ; 21) s'étendant dans la direction de largeur de pneu, respectivement,

dans lequel, par rapport à une rainure latérale (20 ; 21) d'au moins une partie de méplat d'épaulement (30) parmi la paire de parties de méplat d'épaulement (30), une extrémité de la rainure latérale (20 ; 21) atteint une extrémité de contact au sol de bande de roulement, et l'autre extrémité reste dans la partie de méplat (30) sans atteindre la rainure circonférentielle la plus extérieure (12).

**10.** Pneu (1) selon la revendication 9, dans lequel, par rapport à une rainure latérale (20 ; 21) d'au moins une partie de méplat centrale (40 ; 41) parmi les une ou plusieurs parties de méplat centrales (40 ; 41), une extrémité de la rainure latérale (20 ; 21) se relie à l'une des deux rainures circonférentielles (10) cloisonnant la partie de méplat centrale (40 ; 41), et l'autre extrémité reste dans la partie de méplat sans atteindre l'autre rainure circonférentielle (10).

**11.** Pneu (1) selon la revendication 10, dans lequel les deux rainures circonférentielles (10) cloisonnant la partie de méplat centrale (40 ; 41) sont composées d'une rainure circonférentielle (10) présentant une grande distance par rapport à une ligne centrale de pneu (C) et d'une rainure circonférentielle (10) présentant une petite distance par rapport à la ligne centrale de pneu (C), la rainure circonférentielle (10) à laquelle la rainure latérale (20 ; 21) se relie étant la rainure circonférentielle (10) présentant la grande distance par rapport à la ligne centrale de pneu (C).

**12.** Pneu (1) selon l'une quelconque des revendications 1 à 11, dans lequel le pneu (1) est un pneu de roulage à plat.

**13.** Procédé d'évaluation d'un degré d'orientation d'une charge de fibres courtes dans un produit moulé d'une composition de caoutchouc comprenant la charge de fibres courtes, le procédé comprenant :

(1) une étape de découpage de la composition de caoutchouc dans une direction qui est horizontale par rapport à une direction de moulage par extrusion de la composition de caoutchouc et qui maximise une section transversale du produit moulé, afin de découper une section transversale à observer,

(2) une étape d'imagerie de la section transversale à observer avec un microscope électronique pour obtenir une image de microscope électronique,

(3) une étape d'extraction, à partir de l'image de microscope à balayage, d'une image d'une masse de charge de fibres courtes uniquement,

(4) une étape de mesure d'un angle θ défini par une direction d'orientation de chaque masse de charge de fibres courtes par rapport à une direction de référence déterminée arbitrairement, dans l'image de la masse de charge de fibres courtes,

(5) une étape de calcul d'une dispersion V d'un angle défini par la direction de référence et la direction d'orientation de chaque masse de charge de fibres courtes par l'équation suivante basée sur l'angle θ,

$$V = 1 - R$$

$$R = \left| \frac{1}{N} \sum_j \exp(2i\theta_j) \right|$$

$$\{\theta_j \mid j = 1,2,..., N\}$$

[dans laquelle i représente une unité imaginaire, N est le nombre de masses de charge de fibres courtes qui peut être confirmé à partir d'une plage d'une zone de référence d'une image de microscope électronique de la section transversale à observer, et θ représente un angle (radian) défini par la direction d'orientation de chaque masse de charge de fibres courtes avec la direction de référence dans la section transversale à observer.], et

(6) une étape d'évaluation d'un degré d'orientation de la charge de fibres courtes à partir de la dispersion V.

# FIG. 1

# FIG.2

# FIG.3

# FIG. 4

# FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014189212 A
- RU 2748341 C1
- WO 2019140396 A1